# EUROPÄISCHE PATENTSCHRIFT

(11) **EP 2 985 624 B1**
(45) Veröffentlichungstag und Bekanntmachung des Hinweises auf die Patenterteilung: **10.03.2021**
(21) Anmeldenummer: 14180881.6
(22) Anmeldetag: 13.08.2014
(51) Int. Cl.: G01S 5/02

(54) **Verfahren und Vorrichtungen zum Bestimmen der Orientierung einer beweglichen Kommunikationseinrichtung**
Method and devices for determining the orientation of a movable communication device
Procédé et dispositifs de détermination de l'orientation d'un dispositif de communication mobile

(43) Veröffentlichungstag der Anmeldung: 17.02.2016
(73) Patentinhaber: Deutsche Telekom AG, 53113 Bonn (DE)
(72) Erfinder: Witych, Michael, 53227 Bonn (DE); Müller, Dietmar, 53227 Bonn (DE); Welzel, Thomas, 53604 Bad Honnef (DE)
(74) Vertreter: Blumbach · Zinngrebe Patentanwälte PartG mbB

(56) Entgegenhaltungen:
- US-A1- 2002 180 636
- US-A1- 2003 032 436
- US-A1- 2006 262 141
- US-A1- 2007 052 951
- US-A1- 2011 231 133

## Beschreibung

Die Erfindung betrifft ein Verfahren zum Bestimmen der Orientierung wenigstens einer beweglichen, drahtlosen Kommunikationseinrichtung, eine bewegliche, drahtlose Kommunikationseinrichtung zum Einsatz in einem drahtlosen Kommunikationsnetz, eine zentrale, drahtlose Kommunikationseinrichtung zum Bestimmen der Orientierung wenigstens einer beweglichen Kommunikationseinrichtung sowie ein Computerprogramm.

Auf dem Markt sind Mobilfunktelefone, insbesondere sogenannte Smartphones, erhältlich, die unter anderem eine Kamera, einen GPS-Empfänger und Bewegungssensoren zur Bestimmung der Änderung von Orientierungen und Positionen enthalten. Mit Hilfe einer Kamera und der Auswertung digitaler Bildinformation können Orientierungen des Smartphones absolut im Raum bestimmt werden. Ein Gyroskop kann relative Änderungen von Orientierungen erfassen. Mit Hilfe eines GPS-Empfängers kann die Position des Smartphones berechnet werden.

Aus US 2011/0231133 A1 ist eine drahtlose bewegliche Plattform, wie zum Beispiel ein Mobilfunktelefon, bekannt, deren Orientierung bestimmt werden kann, indem von aktiven Sendern ausgestrahlte Funksignale an der Plattform von einem Antennen-Array empfangen und die Richtungen der empfangenen Funksignale bestimmt werden.

US 2007/0052951 A1 beschreibt ein bodenbasiertes Vermessungssystem, welches jeweils am Boden befestigte passive Steuerpunkte und Vermessungsgeräte aufweist, wobei den passiven Steuerpunkten Positionsdaten zugeordnet sind, und wobei die Steuerpunkte nicht von sich aus Signale zu den Vermessungsgeräten aussenden.

Aus US 2002/0180636 A1 ist ein Ortungs- und Standortverfolgungsverfahren bekannt, welches zur Bestimmung der Position und Geschwindigkeit eines bewegten Ziels mit Hilfe passiver Sensoren dient.

Der Erfindung liegt die Aufgabe zugrunde, Maßnahmen bereitzustellen, die es ermöglichen, die Bestimmung der Orientierung einer beweglichen, drahtlosen Kommunikationseinrichtung zu verbessern, oder die Orientierung einer beweglichen Kommunikationseinrichtung zu bestimmen, auch wenn die bewegliche Kommunikationseinrichtung keine Orientierungssignale empfangen und/oder auswerten kann.

Die Erfindung macht Gebrauch von den Kenntnissen und mathematischen Gleichungsmodellen der aus der Geodäsie bekannten Netzausgleichungsverfahren, welche bei drahtlosen beweglichen und, wenn vorhanden, bei drahtlosen statischen Kommunikationseinrichtungen angewendet werden, um die Orientierung und, wenn gewünscht, auch die Position wenigstens einer beweglichen Kommunikationseinrichtung zu schätzen.

Ein Kerngedanke der Erfindung kann darin gesehen werden, dass die Orientierung einer beweglichen, drahtlosen Kommunikationseinrichtung unter Anwendung einer Netzausgleichung erstmalig oder in verbesserter Weise geschätzt werden kann, wobei in der Netzausgleichung vorzugsweise Beobachtungswerte, welche die relative Orientierung und, wenn gewünscht, die relative Position zwischen zwei Kommunikationseinrichtungen definieren, und absolute Orientierungsinformationen und, wenn gewünscht, absolute Positionsinformationen, von mehreren ausgewählten beweglichen und, wenn vorhanden, auch statischen Kommunikationseinrichtungen, welche zumindest für einen vorgebbaren Zeitpunkt miteinander in kommunikativer Verbindung stehen, berücksichtigt werden.

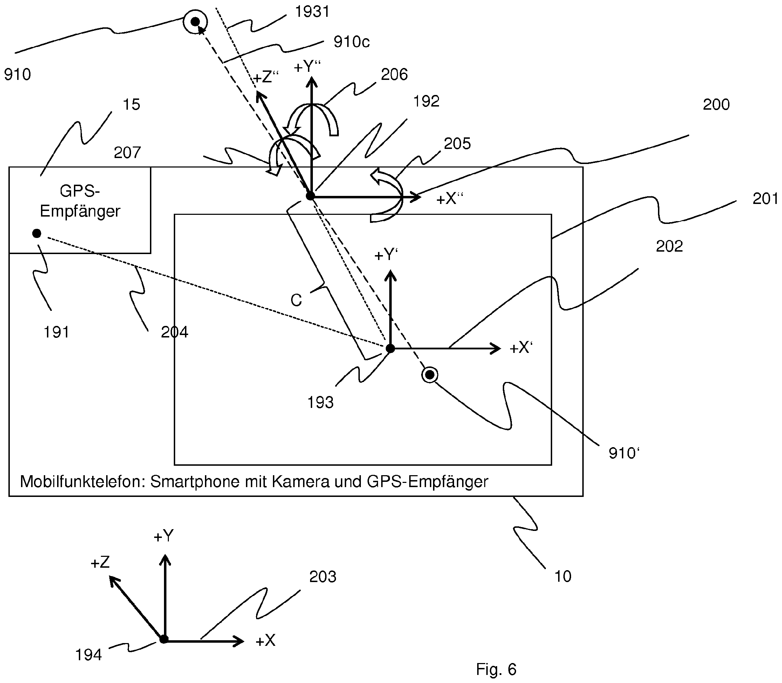

Ein Gesichtspunkt der Erfindung kann darin gesehen werden, dass mehrere Kommunikationseinrichtungen, von denen wenigstens eine bewegliche Kommunikationseinrichtung ist, temporär als lokale Koordinatensysteme innerhalb eines geometrischen Lagenetzes betrachtet werden können, dessen Lagepunkte die Ursprünge der lokalen Koordinatensysteme sind. Das geometrische Lagenetz mit seinen Lagepunkten ist in einem übergeordneten Koordinatensystem definiert, wie es beispielsweise in Fig. 6 gezeigt und mit 203 bezeichnet ist. Ein lokales Koordinatensystem einer Kommunikationseinrichtung, welches beispielhaft in Fig. 6 gezeigt und mit 200 bezeichnet ist, ist bekannter Weise zum Beispiel durch drei Orientierungswinkel, drei Translationen und einen Maßstab relativ zu einem anderen Koordinatensystem, zum Beispiel dem übergeordneten Koordinatensystems 203 eindeutig beschrieben. In diesem Fall kann die Orientierung, und wenn gewünscht, auch die Position wenigstens einer beweglichen Kommunikationseinrichtung unter Anwendung einer aus der Geodäsie bekannten allgemeinen Netzausgleichung bestimmt werden,
- wenn die Lagepunkte des Lagenetzes ebenfalls mitzubestimmen sind,
   wobei die aus der Geodäsie bekannten mathematischen Modelle und Bestimmungsgleichen als Grundlage dienen können.
   Die Orientierung mindestens einer Kommunikationseinrichtung kann aber auch mit den Methoden der Ausgleichungsrechnung bestimmt werden,
- wenn die Lagepunkte nicht in ihrer Lage zu einem vorgegebenen übergeordneten Koordinatensystem 203 bestimmt werden sollen und/oder bestimmt werden können.

In diesem Fall werden zum Beispiel entweder relative Orientierungen zu anderen Kommunikationseinrichtungen und/oder relative Orientierungen zu beliebig festlegbaren übergeordneten Koordinatensystemen bestimmt, wobei die Koordinatensysteme, in denen die Berechnungen stattfinden, frei gewählt werden können und oftmals nur aufgrund von ausgleichungstechnischen Besonderheiten, wie der Realisierung einer nichtnegativen Beeinflussung eines Ausreißertests in der Ausgleichung, festgelegt werden. Die aus der Geodäsie bekannten mathematischen Modelle und Bestimmungsgleichen können hierfür als Grundlage dienen und sind dem Fachmann bekannt.

Vorzugsweise wird für jede bewegliche und/oder statische Kommunikationseinrichtung ein lokales Koordinatensystem definiert, auf welches die Messungen der Kommunikationseinrichtungen bezogen werden. Wird ein übergeordnetes Koordinatensystem, auch Zielsystem genannt, verwendet, können Koordinaten der lokalen Koordinatensysteme entsprechend transformiert werden.

Wird eine bewegliche Kommunikationseinrichtung, wie zum Beispiel ein Smartphone, bewegt, kann man in der Regel davon ausgehen, dass ihre Orientierung und ggf. auch ihre Position nicht exakt, d. h. nicht fehlerfrei, bekannt sind und somit zum Beispiel die Standardabweichung eines Orientierungswinkels und ggf. einer Koordinate somit nicht zu Null wird. Wenn ihre Orientierung und ggf. auch ihre Position während oder nach der Bewegung bekannt ist, dann ist diese stochastisch definiert, also nicht fehlerfrei bekannt und ihre Orientierungswinkel und ggf. auch ihre Koordinaten besitzen dann zum Beispiel Standardabweichungen größer als Null. Existieren sehr gute Orientierungs- oder Positionsbestimmungen für bewegliche Kommunikationseinrichtungen, so kann man unter bewusster Aufgabe der Strenge eines Ausgleichungsmodells diese in einem weiteren Auswertungsprozess auch als fehlerfreie Orientierungen oder Positionen nutzen, also als Festlegung unter Zwang, sofern die Vernachlässigung der Strenge abgeschätzt und toleriert werden kann.

Statische Kommunikationseinrichtungen, wie z. B. ein Wi-Fi Zugangspunkt mit angeschlossener fest montierter Kamera, liegen im Vergleich mit beweglichen Kommunikationseinrichtungen in der Regel in ihrer Orientierung und Position als hochgenau bestimmt vor, wodurch diese statischen Kommunikationseinrichtungen unter Aufgabe der Strenge eines Netzausgleichungsmodells oft als fehlerfreie Orientierungen und Positionen durch Formulierung eines algebraischen Zwanges genutzt werden. Eine statische Kommunikationseinrichtung kann aber auch mit stochastisch definierter Orientierung und/oder Position im Netzausgleichungsprozess behandelt werden und dadurch auch Korrekturen durch die Ausgleichung erhalten oder in ihren Werten zum Beispiel mittels eines statistischen Hypothesentests überprüft werden. Auch eine bewegliche Kommunikationseinrichtung kann temporär als statische Kommunikationseinrichtung betrachtet werden, wenn sie zum Beispiel abgelegt oder vorübergehend nicht bewegt worden ist.

Vorzugsweise wird angenommen, dass temporär statische Kommunikationseinrichtungen jeweils über fehlerfrei angenommene lokale Koordinatensysteme verfügen.

In der Praxis geht man davon aus, dass Orientierungen und ggf. auch die Positionen der beweglichen Kommunikationseinrichtungen vor Durchführung einer Netzausgleichung, wenn überhaupt, nur näherungsweise bekannt sind. Dank der Erfindung können diese Orientierungen und ggf. auch diese Positionen mittels einer Netzausgleichung besser geschätzt werden. Auch geht man in der Regel davon aus, dass Orientierungen und Positionen von statischen Kommunikationseinrichtungen vor der Ausführung einer Netzausgleichung zur Schätzung der Orientierung und optional zur Schätzung der Position einer beweglichen Kommunikationseinrichtung ausreichend genau bekannt sind und in der Netzausgleichung nicht verbessert geschätzt werden sollen.

In der Beschreibung und in den Ansprüchen ist unter Netzausgleichung vorzugsweise, je nach Situation, auch Folgendes zu verstehen:
a) Eine Netzausgleichung, die eine freie und/oder stochastisch definierte und/oder unter vollem Zwang realisierte Festlegung des übergeordneten Koordinatensystems 203 beinhaltet;,
b) eine Netzausgleichung, die auf einer sequentiellen Ausgleichung und/oder rekursiven Filtertechniken bestehen kann;
c) eine Netzausgleichung, die auf mehreren nacheinander durchgeführten Ausgleichungen beruhen kann, so zum Beispiel einer Ausgleichung in einem geeigneten Berechnungskoordinatensystem zum Beispiel auch von Blockausgleichungen und anschließender Ausgleichung zur Transformation in ein finales Zielkoordinatensystem;
d) eine Netzausgleichung, die einen Zwang oder keinen Zwang auf die ausgeglichenen Beobachtungen ausübt;,
e) eine Netzausgleich, die zu schätzende Zielgrößen enthält, welche zum Beispiel
   - Orientierungen oder
   - Orientierungen und zugleich Positionen, oder
   - beliebige Parameter zur Festlegung von Koordinatensystemen und/oder
   - Genauigkeiten aller vorstehenden Zielgrößen und ggf. auch deren Korrelationen enthalten; und/oder
f) eine Netzausgleichung, deren Beobachtungen und Tests der Beobachtungen auf Ausreißer geeignet gewählt werden, damit eine ausreichende Qualität der Ausgleichung und Zielgrößenbestimmung erzielt wird.

Dem Fachmann sind diese Zusammenhänge für die unterschiedlichen Modelle und Auswertemethoden sowie die algebraische Entartung eines lokalen Koordinatensystems zu einem Punkt bekannt. Dieses wird in der vorliegenden Erfindung genutzt, um mit einem Auswerteprogramm, welches zum Beispiel in einer beweglichen Kommunikationseinrichtung gespeichert ist, eine eindeutige oder überbestimmte Lösung für die Zielgrößen, insbesondere die Orientierung mindestens einer Kommunikationseinrichtung, automatisiert zu ermitteln, wobei das Auswerteprogramm auch voll automatisiert die geeigneten Messungen initiieren, durchführen und deren Genauigkeiten festlegen kann.

Das Zielkoordinatensystem ist i. d. R. das in Fig. 6 gezeigte übergeordnete Raumkoordinatensystem 203. Für Bestimmung und Nutzung der relativen Orientierungen zweier Kommunikationseinrichtungen werden oft auch andere Koordinatensysteme verwendet so z. B. auch die lokalen kommunikationseinrichtungsfesten lokalen Koordinatensysteme.

Die Erfindung wird nachfolgend anhand mehrerer Ausführungsbeispiele in Verbindung mit den Zeichnungen näher erläutert. Es zeigen:
- Fig. 1: eine bewegliche, drahtlose Kommunikationseinrichtung, in welcher die Erfindung verwirklicht ist,
- Fig. 2: eine zentrale drahtlose Kommunikationseinrichtung, in welcher die Erfindung verwirklicht ist,
- Fig. 3: ein beispielhaftes drahtloses Kommunikationsnetz mit vier beweglichen Kommunikationseinrichtungen,
- Fig. 4: ein alternatives drahtloses Kommunikationsnetz mit drei beweglichen Kommunikationseinrichtungen mit Richtungsmessungsfunktionen und einer beweglichen Kommunikationseinrichtung ohne Richtungsmessungsfunktion und ohne Orientierungsdefinition,
- Fig. 5: ein weiteres alternatives drahtloses Kommunikationsnetz mit zwei statischen Kommunikationseinrichtungen mit Richtungsmessfunktion, eine bewegliche Kommunikationseinrichtung mit Richtungsmessfunktion und eine bewegliche Kommunikationseinrichtung ohne Richtungsmessfunktion und ohne Orientierungsdefinition,
- Fig. 6: die in Fig. 1 gezeigte bewegliche Kommunikationseinrichtung, die durch GPS und eine
digitale Kamera positionier- und orientierungsfähig ist und eine beispielhafte Festlegung eines kommunikationseinrichtungsfesten lokalen Koordinatensystems aufweist.

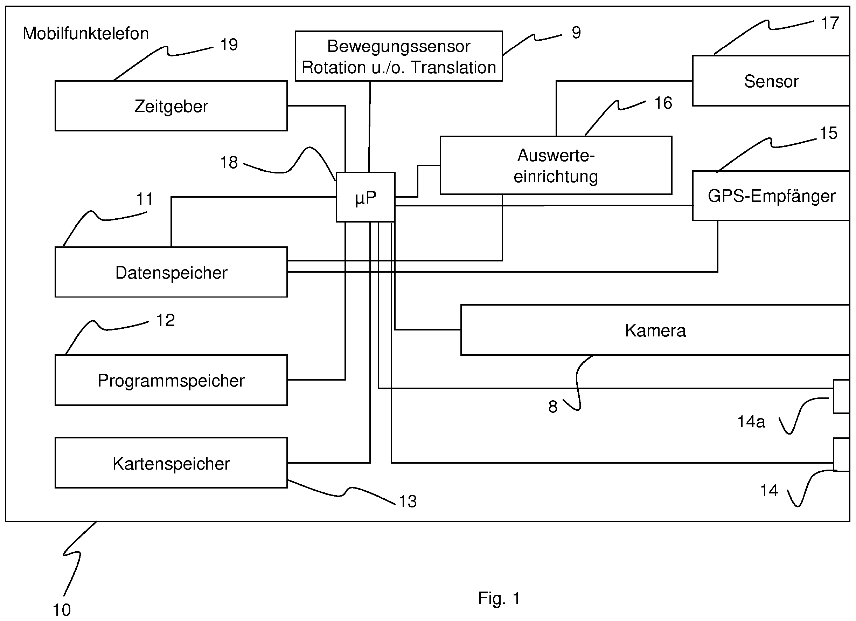

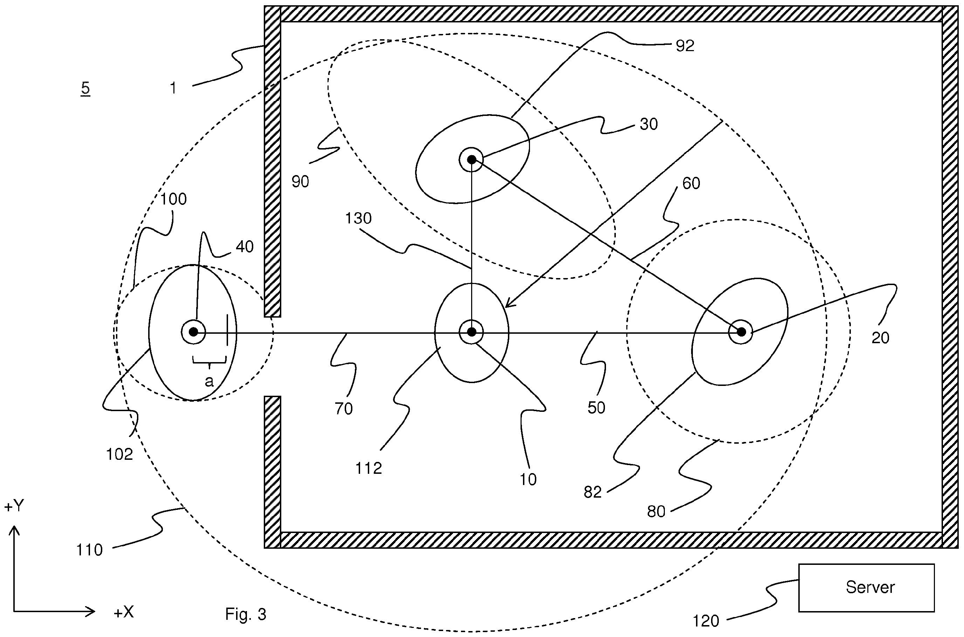

Fig. 1 zeigt als eine beispielhafte bewegliche, drahtlose Kommunikationseinrichtung 10 ein Mobilfunktelefon, insbesondere ein Smartphone. Das Smartphone 10 kann zum Einsatz in einem drahtlosen Kommunikationsnetz eingesetzt werden, wie es ausschnittsweise in den Figuren 3 bis 5 dargestellt ist.

Das Smartphone 10 weist wenigstens eine drahtlose Datenkommunikationsschnittstelle auf, über die es mit anderen beweglichen und/oder statischen Kommunikationseinrichtungen Daten austauschen kann. Solche Kommunikationseinrichtungen sind beispielhaft in den Figuren 3 bis 5 gezeigt und mit den Bezugsnummern 20 bis 40 versehen. Im vorliegenden Beispiel weist das Smartphone 10 zwei drahtlose Datenkommunikationsschnittstellen 14 und 14a auf. Bei der Schnittstelle 14 kann es sich um eine Wi-Fi Direct-fähige Schnittstelle handeln, während die Schnittstelle 14a als LTE Direct-fähige Schnittstelle (LTE Long Term Evolution) ausgebildet sein kann. Wie nachfolgend noch detailliert erläutert wird, kann das Smartphone 10 über die Datenkommunikationsschnittstellen 14 und 14a unter anderem, wenn vorhanden, seine eigenen Orientierungsinformationen und Positionsinformationen sowie Beobachtungswerte, welche relative Orientierungen und/oder relative Positionen zu einer anderen Kommunikationseinrichtung betreffen, von wenigstens einer anderen beweglichen Kommunikationseinrichtung und/oder wenigstens einer statischen Kommunikationseinrichtung empfangen bzw. wenigstens einer anderen beweglichen Kommunikationseinrichtung und/oder wenigstens einer statischen Kommunikationseinrichtung zu senden. Eine Orientierungsinformation, die die Orientierung der jeweiligen Kommunikationseinrichtung festlegt, kann die jeweilige Kommunikationseinrichtung beispielsweise mittels einer Kamera 8 und einer Bildverarbeitung selbst erzeugen.

Eine Orientierungsinformation enthält zum Beispiel Angaben über wenigstens einen Orientierungswinkel, deren Genauigkeit und gegebenenfalls über einen Gültigkeitszeitpunkt.

Um Beobachtungswerte betreffend eine absolute und/oder relative Orientierung und gegebenenfalls eine absolute und/oder relative Position bereitstellen zu können, kann das Smartphone 10 wenigstens eine in der Fig. 1 als Kamera 8 bezeichnete digitale Bilderfassungseinrichtung enthalten, deren aufgezeichnete Bilddaten in der Kamera 8 oder in einer als Datenspeicher bezeichneten Speichereinrichtung 11 abgelegt werden können. Durch Ausführung eines zum Beispiel im Programmspeicher 12 gespeicherten Programms kann der Mikroprozessor 18 aus den im Bildspeicher gespeicherten Bilddaten geeignete Orientierungs- und Positionsinformationen für eine Netzausgleichung ableiten.

Eine Positionsinformation, die das Smartphone 10 beispielsweise mittels eines GPS-Empfängers 15 selbst erzeugen kann, enthält zum Beispiel Angaben über wenigstens eine Positionskoordinate, deren Genauigkeit und gegebenenfalls Angaben über einen Gültigkeitszeitpunkt.

In dem Datenspeicher 11 können Orientierungsinformationen über die absolute Orientierung des Smartphones 10, und/oder absolute Orientierungsinformationen anderer Kommunikationseinrichtungen und wenigstens ein Beobachtungswert abgelegt werden, der die relative Orientierung zwischen zwei Kommunikationseinrichtungen definiert. In dem Datenspeicher 11 können auch Positionsinformationen über die Position des Smartphones 10 und/oder Positionsinformationen anderer Kommunikationseinrichtungen und wenigstens ein Beobachtungswert abgelegt werden, der die relative Lage zwischen zwei Kommunikationseinrichtungen definiert. Solche Positionsinformationen können wenigstens eine Positionskoordinate, deren Genauigkeit und vorzugsweise einen Gültigkeitszeitpunkt enthalten. Anstelle eines Gültigkeitszeitpunkts kann eine Orientierungs- oder Positionsinformation Angaben enthalten, die dazu verwendet werden können, mit Hilfe einer Interpolation oder Extrapolation aus vorangegangenen Positionsinformationen und/oder Beobachtungswerten einen geeigneten Gültigkeitszeitpunkt zu ermitteln.

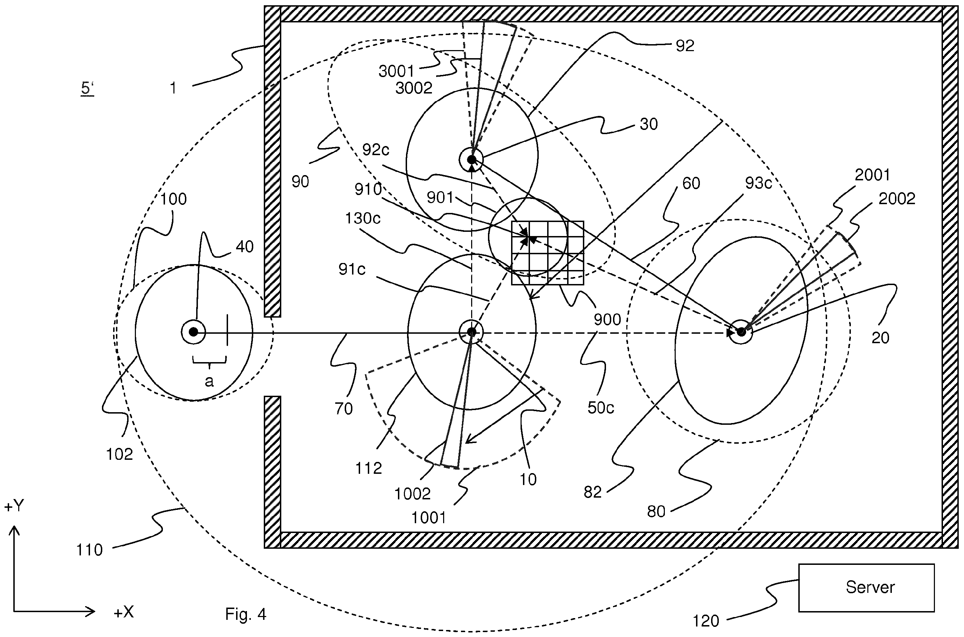

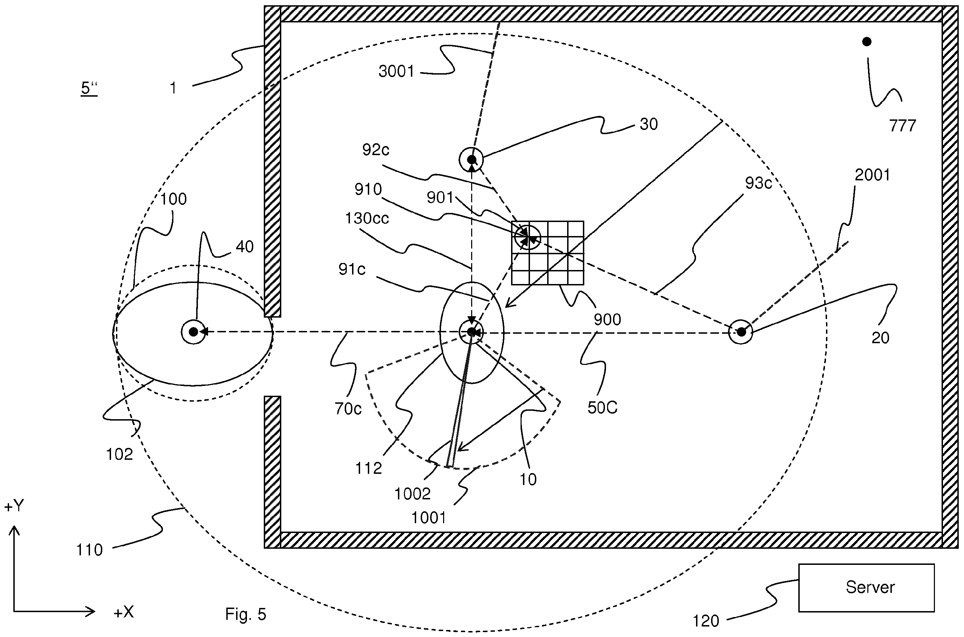

Weiterhin weist das Smartphone 10 eine Steuereinrichtung 18 auf, die im vorliegenden Beispiel als Mikroprozessor ausgebildet ist. Der Mikroprozessor 18 kann dazu ausgebildet sein, Orientierungswinkel und Positionskoordinaten des Smartphones 10 sowie die Genauigkeiten der Orientierungswinkel und Positionskoordinaten in Abhängigkeit von wenigstens einem Beobachtungswert, der die relative Orientierung zwischen zwei Kommunikationseinrichtungen definiert, sowie der Orientierungsinformation oder Positionsinformation wenigstens einer anderen Kommunikationseinrichtung zu bestimmen. Der Mikroprozessor 18 ist auch dazu ausgebildet die Kommunikation mit den anderen Kommunikationseinrichtungen zum Zwecke der Netzausgleichung mit Beteiligung der Kommunikationseinrichtung 10 zu steuern, wozu er die Anweisungen aus einem im Programmspeicher 12 abgelegten Programms ausführt. Der Mikroprozessor 18 ist ebenfalls dazu geeignet, die Bilddaten der Kamera 8 nach Beobachtungswerten für eine durchzuführende Netzausgleichung zu durchsuchen und diese zu detektieren und zu extrahieren. Das Programm ist auch fähig, die Beobachtungswerte der Kameras unterschiedlicher Kommunikationseinrichtungen eindeutig aufeinander zu beziehen, so dass z. B. der Strahlenschnitt von Bildstrahlen unterschiedlicher Kommunikationseinrichtungen in einem einzigen Objektpunkt eines Objektraumes erkannt werden kann. Ein solcher Objektpunkt ist in den Fig. 4 und 5 dargestellt und mit dem Bezugszeichen 910 versehen. Liegen für einen Objektraum Orientierungs- oder Positionsinformationen vor, so können diese von der Kommunikationseinrichtung 10 erkannt werden, die Daten dazu beschafft und den Bildinformationen und ihren Beobachtungsinformationen eindeutig zugeordnet werden. Mithilfe der Kamera 8 und der Bildverarbeitung eines Kamerabildes im Mikroprozessor 18 können ebenfalls andere Kommunikationseinrichtungen als Ziele erkannt und Bildstrahlen zu diesen Zielen ermittelt werden.

Das Smartphone 10 kann wenigstens eine in der Fig. 1 als Sensor bezeichnete Messeinrichtung 17 zum Messen einer Messgröße enthalten, die einen Beitrag zur Bestimmung eines Beobachtungswertes liefert. Bei der Messeinrichtung 17 kann es sich um bekannte Sensoren handeln, die vorzugsweise zum Messen eines Abstands, eines Winkels oder einer Richtung zu einer anderen Kommunikationseinrichtung ausgebildet sind. Denkbar ist, dass der Sensor 17 zum Messen eines Winkels zwischen sich und einer anderen Kommunikationseinrichtung, die sich in der Nachbarschaft zum Smartphone 10 befindet, ausgebildet ist. Beispielsweise kann der Sensor 17 auch die Signalstärke des Sendesignals einer anderen Kommunikationseinrichtung messen.

Das vom Sensor 17 erzeugte Messsignal wird beispielsweise einer separaten Auswerteeinrichtung 16 zugeführt. Alternativ können Sensor 17 und Auswerteeinrichtung 16 auch eine einzige Baukomponente bilden. Die Auswerteeinrichtung 16 ist dazu ausgebildet, in Abhängigkeit vom empfangenen Messsignal den entsprechenden Beobachtungswert zu bestimmen, der die relative Lage zwischen dem Smartphone 10 und einer weiteren Kommunikationseinrichtung (nicht dargestellt), oder zwischen zwei weiteren Kommunikationseinrichtungen definiert.

Um seine Position selbst bestimmen zu können, kann das Smartphone 10 einen GNSS (Global Navigation Satellite System)-fähigen Empfänger aufweisen, der im vorliegenden Beispiel ein herkömmliche GPS-Empfänger 15 ist. Der GPS-Empfänger 15 ist zum Empfangen und Auswerten von Positionssignalen eines Satellitensystems ausgebildet. Aus den Positionssignalen wird eine Positionsinformation gewonnen, die die Positionskoordinaten des Smartphones 10, die Genauigkeit dieser Positionskoordinaten und vorzugsweise noch einen Gültigkeitszeitpunkt enthält. Die Genauigkeit liegt in der Regel als Standardabweichung vor.

Um Lücken in den GPS Signalen zu überbrücken, kann das Smartphone auch einen Bewegungssensor 9 enthalten, der z. B. relative Positionsänderungen kurzzeitstabil erfasst, ohne hierzu Messungen zu anderen Kommunikationseinrichtungen durchzuführen. GPS-Empfänger 15 und Sensor 9 realisieren zusammen dann durch gemeinsame Verarbeitung ihrer Daten, welche vom Mikroprozessor 18 ausgeführt wird, eine Koppelortung für translatorische Bewegungen.

Das Smartphone 10 kann zum Beispiel wenigstens einen kombinierten Bewegungssensor 9 aufweisen, der translatorische und zugleich rotatorische Änderungen der Position und zugleich der Orientierung bezüglich des Smartphones 10 liefert und hierfür keine Infrastruktureinrichtungen außerhalb der Kommunikationseinrichtung 10 benötigt. Ein kombinierter Bewegungssensor 9 könnte zum Beispiel einen Beschleunigungsmesser und einen Kreisel enthalten.

Durch die Nutzung der Kamera 8, welche durch Beobachtungen ermöglicht, dass das Smartphone 10 seine absolute Orientierung bestimmen kann, und durch die zusätzliche Nutzung des Bewegungssensor 9 bezüglich der relativen Änderung von Orientierung bildet das Smartphone 10 ein System zur Koppelorientierung. Zusammen mit dem Sensor 17 bildet das Smartphone 10 somit ein System zur kontinuierlichen Bestimmung der Orientierung und Position der Kommunikationseinrichtung 10, welches durch zusätzliche Messungen zu anderen Kommunikationseinrichtungen zum gleichen oder einem späteren Zeitpunkt und anschließender Netzausgleichung neue verbesserte Orientierungen und ggfs. auch Positionen für sich und auch für andere Kommunikationseinrichtungen bestimmen kann.

Zur Überbrückung von Datenlücken oder einer unzureichenden Gleichzeitigkeit von Mess-, Rechen- oder Ausgleichungsgrößen können zusätzlich auch an sich bekannte Bewegungsmodelle oder Bewegungsänderungsmodelle für Translationen und Rotationen genutzt werden, was durch ein im Programmspeicher 12 speicherbares Programm realisiert werden kann. Hier können zum Beispiel eine sequentielle Ausgleichung oder KALMAN Filtertechniken genutzt werden.

In dem Programmspeicher 12 kann ferner wenigstens ein Programm zur Ausführung einer Netzausgleichung, d.h. ein Optimierungsalgorithmus zum Schätzen der Orientierung und von Positionskoordinaten und deren Genauigkeit und vorzugsweise zum Bestimmen eines Gültigkeitszeitpunktes abgelegt sein. Bereits an dieser Stelle sei erwähnt, dass in dem Programmspeicher 12 beispielhaft ein Optimierungsalgorithmus zum Durchführen einer freien Netzausgleichung und ein Optimierungsalgorithmus zum Durchführen einer Netzausgleichung unter Verwendung eines vorbestimmten, zum Beispiel a priori bekannten Koordinatensystems abgelegt sind. Der Mikroprozessor 18 ist dazu ausgebildet, zum Beispiel ereignis- oder situationsgesteuert einen der beiden Optimierungsalgorithmen aufzurufen und auszuführen, um seine eigene Orientierung und Position und/oder die Orientierung und Position wenigstens einer anderen beweglichen Kommunikationseinrichtung zu bestimmen, und/oder seine mittels des GPS-Empfängers und Bewegungssensors ermittelte Orientierung und Position zu verbessern. Je nach Anwendungsfall können die Optimierungsalgorithmen Gleichungssysteme enthalten, welche auf einem statistischen Modell, insbesondere einem Gauß-Markov-Modell oder einem heuristischen Modell basieren. Solche Gleichungssysteme und Modelle sind hinlänglich bekannt. Vorzugsweise beruhen die Optimierungsalgorithmen bzw. die Netzausgleichungen auf der bekannten Methode der kleinsten Fehlerquadrate. Als Unbekannte zu bestimmende Größen können bei der Netzausgleichung die Orientierungswinkel und deren Genauigkeiten und die Positionskoordinaten und deren Genauigkeit des Smartphones 10 verwendet werden, wozu ein gemeinsamer Gültigkeitszeitpunkt für diese zu bestimmenden Größen und für wenigstens einen gemessenen Beobachtungswert sowie gegebenenfalls die Orientierungen und Positionskoordinaten und deren Genauigkeiten anderer Kommunikationseinrichtungen verwendet wird.

Der Mikroprozessor 18 kann dazu ausgebildet sein, die im Programmspeicher 12 hinterlegten Optimierungsalgorithmen, wenn erforderlich, mehrmals auszuführen und anschließend in Abhängigkeit davon eine zusätzliche Koordinatensystemtransformation der Positionsinformation in ein anderes vorgegebenes Zielkoordinatensystem durchzuführen oder eine Blockausgleichung von sich teilweise oder komplett überlappenden, aber bereits zuvor schon ausgeglichenen geometrischen Netzen vorzunehmen, um die Orientierungsinformationen und Positionsinformationen zu verbessern oder zu überprüfen. Hierzu können die notwendigen Daten aus dem Datenspeicher 11 und aus einer Datenübermittlung über die Kommunikationsschnittstelle 14 verwendet werden.

Die Computerprogramme zur Blockausgleichung und zur Koordinatensystemtransformation können ebenfalls vorzugsweise im Programmspeicher 12 abgelegt sein. Auch ein Computerprogramm zur Bildverarbeitung der digitalen Kameradaten kann ebenfalls vorzugsweise im Programmspeicher 12 abgelegt sein.

Eine weitere Speichereinrichtung 13 kann im Smartphone 10 vorgesehen sein, um eine digitale geographische Karte abzuspeichern, die navigierbare Elemente enthält. Die navigierbaren Objekte dieser digitalen Karte ermöglichen einem Computerprogramm Navigationsanweisungen zu ermitteln, die die Navigation von einem Objekt zu einem anderen Objekt auch über andere Objekte erlauben, wobei die Objekte Punkt-Objekte und/oder räumliche Objekte sein können. Beispielsweise ist in der Speichereinrichtung 13 die digitale Karte eines Messgeländes abgelegt, welches den Figuren 3 bis 5 zugrunde gelegt wird.

Neben den beispielhaften Wi-Fi Direct-fähigen und LTE Direct-fähigen Datenkommunikationsschnittstellen 14 und 14a können weitere Kommunikationsschnittstellen, wie zum Beispiel Schnittstellen gemäß dem BlueTooth-Standard, oder Nahfeld-Kommunikationsschnittstellen (NFC-Interface, Near Field Communication IF), wie zum Beispiel NFC RFID (NFC Radio Frequency Identification)-fähige Schnittstellen, im Smartphone 10 implementiert sein, die ebenfalls eine Kommunikation mit benachbarten Kommunikationseinrichtungen ermöglichen.

Ferner kann das Smartphone 10 einen Zeitgeber 19 aufweisen. Der Zeitgeber 19 kann dazu dienen, zu einem vorbestimmten Gültigkeitszeitpunkt den Mikroprozessor 18 anzustoßen, den Sensor 17 und den GPS-Empfänger 15 und den Sensor 9 zu aktivieren, um einen Beobachtungswert und/oder die Position des Smartphones zu bestimmen. Zudem kann der Mikroprozessor 18 dazu ausgebildet sein, unter Ansprechen auf den vom Zeitgeber 19 gelieferten Gültigkeitszeitpunkt einen der gespeicherten Optimierungsalgorithmen aufzurufen und auszuführen.

Zudem kann der Mikroprozessor 18 dazu ausgebildet sein, vor Durchführung einer Netzausgleichung gespeicherte Anweisungen auszuführen, um beispielsweise geeignete Kommunikationseinrichtungen in der Umgebung des Smartphones 10 zu finden, welche, wenn vorhanden, Orientierungsinformationen, Positionsinformationen und Beobachtungswerte liefern können, welche in der Netzausgleichung zumindest zur Schätzung der Orientierung des Smartphones 10 berücksichtigt werden können. Unter Ausführung dieser Anweisungen kann der Mikroprozessor 18 Orientierungsinformationen und/oder Positionsinformationen von den ausgewählten Kommunikationseinrichtungen anfordern, Messungen zwischen den gefundenen Kommunikationseinrichtungen durchführen lassen, sowie dafür sorgen, dass all diese Informationen zur Kommunikationseinrichtung 10 oder einer zentralen Einrichtung 120 übertragen werden.

Um geeignete Kommunikationseinrichtungen zu finden, kann im Smartphone 10 ein vom Mikroprozessor 18 ausführbares Auswerteprogramm gespeichert sein, welches zum Beispiel aus zu diskreten Zeitpunkten oder kontinuierlich empfangenen Daten von Kommunikationseinrichtungen die Kommunikationseinrichtungen auswählen kann, die Orientierungsinformationen und/oder Positionsinformationen und/oder Beobachtungswerte liefern können, mit denen in einer Netzausgleichung die Orientierung und, wenn gewünscht, auch die Position des Smartphones 10 zu einem Gültigkeitszeitpunkt verbessert oder überhaupt erst geschätzt werden kann.

Zudem kann der Mikroprozessor 18 dazu ausgebildet sein, unter Ansprechen auf den vom Zeitgeber 19 gelieferten Gültigkeitszeitpunkt eine Blockausgleichung durchzuführen oder eine Ähnlichkeitstransformation in ein Zielkoordinatensystem durchzuführen. Sofern erforderlich, kann das Smartphone 10 eine Netzausgleichung zur Schätzung seiner Orientierung und, wenn gewünscht, seiner Position auch mehrmals ausführen, um eine gewünschte Genauigkeit hinsichtlich der Orientierung und Position zu erzielen. Zu beachten ist, dass vor jeder Netzausgleichung das Smartphone 10 neue, geeignete Kommunikationseinrichtungen auswählen kann, um bessere Ergebnisse bei der Netzausgleichung zu erzielen.

Der Mikroprozessor 18 kann dazu ausgebildet sein, die zum Beispiel im Programmspeicher 12 gespeicherten Anweisungen zur Ausführung einer Netzausgleichung abzuarbeiten, um die Orientierungswinkel und Positionskoordinaten des Smartphones 10 und gegebenenfalls die Orientierungswinkel und Positionskoordinaten der wenigstens zwei anderen Kommunikationseinrichtungen sowie die jeweilige Genauigkeit dieser Orientierungen und Positionskoordinaten und einen Gültigkeitszeitpunkt zu bestimmen.

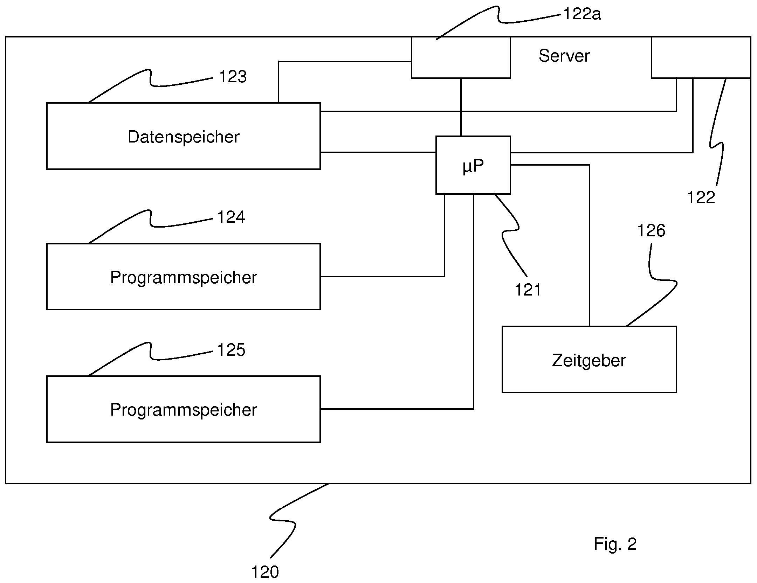

Fig. 2 zeigt als zentrale, drahtlose Kommunikationseinrichtung 120 einen Server, der zum Bestimmen der Orientierung und optional zum Bestimmen der Position wenigstens einer Kommunikationseinrichtung, insbesondere der Kommunikationseinrichtung 10 ausgebildet ist. Der Server weist wenigsten eine drahtlose Datenkommunikationsschnittstelle auf, welche z. B. gemäß dem Wi-Fi Direct-Standardprotokoll oder dem LTE Direct-Standardprotokoll ausgebildet ist. Der beispielhaft dargestellte Server 120 weist eine drahtlose Datenkommunikationsschnittstelle 122, welche gemäß dem Wi-Fi Direct-Standardprotokoll ausgebildet ist, und eine weitere Datenkommunikationsschnittstelle 122a auf, welche gemäß dem LTE Direct-Standardprotokoll ausgebildet ist. Über die drahtlosen Datenkommunikationsschnittstellen 122 und 122a kann der Server 120 mit dem Smartphone 10 und beispielsweise mit den in Fig. 3 gezeigten beweglichen Kommunikationseinrichtungen 20 bis 40 Daten austauschen. Insbesondere kann der Server 120 Orientierungsinformationen, Positionsinformationen und Beobachtungswerte und deren Gültigkeitszeitpunkte von anderen Kommunikationseinrichtungen empfangen, welche in einem Datenspeicher 123 abgelegt werden können. In einem Programmspeicher 124 kann ein Optimierungsalgorithmus basierend auf einer Netzausgleichung, insbesondere einer freien Netzausgleichung, zum Schätzen der Orientierungswinkel und Positionskoordinaten einer beweglichen, drahtlosen Kommunikationseinrichtung, wie zum Beispiel des Smartphones 10, abgelegt werden. Ein weiterer Programmspeicher 125 kann vorgesehen sein, in welchem ein Optimierungsalgorithmus zum Schätzen von Orientierungswinken und Positionskoordinaten abgelegt werden kann, der auf einer geometrischen Netzausgleichung unter Verwendung eines wenigstens teilweise unter Zwang oder stochastisch vorbestimmten Koordinatensystems beruht. In einem der Programmspeicher 124 oder 125 kann ebenfalls ein Algorithmus abgelegt sein, der eine Transformation der Ergebnisse einer Netzausgleichung in ein anderes vorgegebenes Zielkoordinatensystem durchführt und/oder eine Blockausgleichung mehrerer sich auch nur teilweise überlappender geometrischer Netze durchführt. Im Server 120 ist eine Steuereinrichtung 121, beispielsweise ein Mikroprozessor 121, implementiert, der auf die Programmspeicher 124 und 125 zugreifen kann, um einen Optimierungsalgorithmus zum Schätzen der Orientierung und von Positionskoordinaten einer beweglichen, drahtlosen Kommunikationseinrichtung und der Genauigkeit der Orientierung und der Positionskoordinaten auszuführen. Weiterhin kann im Server 120 ein Zeitgeber 126 vorgesehen sein, der unter Anderem dazu ausgebildet ist, den Mikroprozessor 121 zu einem vorbestimmten Gültigkeitszeitpunkt anzustoßen, eine Netzausgleichung zur Bestimmung der Orientierung und optional zur Bestimmung der Position einer bewegliche Kommunikationseinrichtung auszuführen und diese gegebenenfalls nachträglich in ein gegebenes Zielkoordinatensystem zu transformieren und/oder eine Blockausgleichung durchzuführen. Der Server 120 ist dazu ausgebildet, die geschätzte Orientierung und deren Genauigkeit sowie die geschätzten Positionskoordinaten und deren Genauigkeit zur jeweiligen beweglichen Kommunikationseinrichtung zu übertragen.

Der Server 120 kann ferner dazu ausgebildet sein, aus den von drahtlosen beweglichen und, wenn vorhanden, statischen Kommunikationseinrichtungen, wie zum Beispiel den Smartphones 10 bis 40, empfangenen Daten zu erkennen, welche Kommunikationseinrichtungen zumindest für einen gewünschten Gültigkeitszeitpunkt ein temporäres stabiles Lagenetz bilden können, um Informationen und Beobachtungswerte bereitstellen zu können, die ermöglichen, die Orientierung und, wenn gewünscht, auch die Position eines bestimmten Smartphones, beispielsweise des Smartphones 10, in einer Netzausgleichung zu verbessern. Bei den empfangenen Daten kann es sich zum Beispiel um Beobachtungswerte, Orientierungsinformationen und/oder Positionsinformationen der jeweiligen Kommunikationseinrichtungen handeln.

Bevor die Figuren 3 bis 5 näher beschrieben werden, wird betont, dass die dort beispielhaft dargestellten Kommunikationseinrichtungen 10 bis 40 bewegliche Kommunikationseinrichtungen, insbesondere Smartphones sein können, die im Aufbau und der Funktionsweise dem in Fig. 1 gezeigten Smartphone 10 entsprechen.

Jedes der Smartphones 10 bis 40 kann dazu ausgebildet sein, zu erkennen, ob und wann es Beobachtungen zu wenigstens einem benachbarten Smartphone durchführen kann, um die relative Orientierung und/oder relative Position zu dem wenigstens einen benachbarten Smartphone zu wenigstens einem vorgegebenen Gültigkeitszeitpunkt oder kontinuierlich zu bestimmen. Weiterhin kann jedes der Smartphones 10 bis 40 dazu ausgebildet sein, zu erkennen, ob und wann es seine eigene Orientierung und/oder seine eigene Position ermitteln kann. Ferner kann jedes der Smartphones 10 bis 40 dazu ausgebildet sein, gemessene Beobachtungswerte, welche relative Orientierungen und/oder relative Positionen betreffen, und seine selbst ermittelten Orientierungen und/oder seine selbst ermittelten Positionen sowie die dazugehörenden Gültigkeitszeitpunkten ohne Aufforderung, also in einem Push-Betrieb, oder auf Anforderung eines bestimmten Smartphones, beispielsweise des Smartphones 10, oder auf Anforderung des Servers 120 dorthin zu übertragen.

Fig. 3 zeigt ausschnittsweise ein beispielhaftes, drahtloses Kommunikationsnetz 5, innerhalb dessen vier mobile Kommunikationseinrichtungen 10, 20, 30 und 40 temporär eine Gruppe bilden. Diese temporäre Gruppe kann als ein temporär stabiles geometrisches Lagenetz mit vier Punkten betrachtet werden, welche durch die vier beweglichen Kommunikationseinrichtungen dargestellt werden. Vereinfacht sei angenommen, dass alle Z-Koordinaten identisch und fehlerfrei bekannt sind und die Streckenmessungen sich somit nur auf den Abstand in der X-Y-Ebene beziehen. 3-dimensionale Betrachtungen sind hieraus einfach ableitbar, da aus den Betrachtungen von 2 nichtparallelen Ebenen die 3-dimensionale Betrachtung eindeutig folgt. Diese Betrachtungsweise gelte auch für alle weiteren Szenarien der Figuren Fig. 4 und 5.

Angenommen sei ferner, dass alle vier Kommunikationseinrichtungen dem Typ 10 in Fig. 1 entsprechen, dass aber eine Orientierungsbestimmung nicht möglich ist, da der Bewegungssensor 9 und die Kamera 8 beispielsweise ausgeschaltet sind. Die in Fig. 3 dargestellten Kommunikationseinrichtungen 10 bis 40 können folglich nur zur Positionsbestimmung, aber nicht zur Orientierungsbestimmung benutzt werden.

Zur Beschreibung der Funktionsweise des in Fig. 3 dargestellten drahtlosen Kommunikationsnetzes 5 wird auf die internationale Anmeldung PCT/EP2014/059236 verwiesen. Eine alleinige Positionsbestimmung ist zwar nicht Gegenstand der Erfindung, aber hier angeführt, um die Ausführungsbeispiele in Verbindung mit den Figuren 4 und 5 besser zu verstehen, da dort Orientierungsbestimmungen und, wenn gewünscht, zeitgleich auch Positionsbestimmungen in einer Netzausgleichung durchgeführt werden können.

Fig. 4 zeigt eine Halle 1 eines Messegeländes. Ferner ist die Momentaufnahme eines beispielhaften, drahtlosen Kommunikationsnetz 5' gezeigt, welches die bewegliche Kommunikationseinrichtung 10 und drei weitere bewegliche Kommunikationseinrichtungen 20, 30 und 40 umfasst, wobei sich die Smartphones 10 bis 30 in der Halle 1 aufhalten, während sich Smartphone 40 in einem Eingangsbereich vor der Halle 1 befindet. Angenommen sei ferner, dass das Smartphone 40 keine Messungen zu Orientierungsbestimmungen durchführen kann, da beispielsweise sein Bewegungssensor und seine Kamera nicht genutzt werden können. In der Halle 1 befindet sich ferner ein gitterförmiges Objekt 900 mit mehreren Gitterpunkten, wobei nur der bereits in Fig. 6 gezeigte Punkt 910 bezeichnet ist. Zu dem Objekt 900 können die Smartphones 10 bis 30 Richtungsmessungen zur Bestimmung ihrer Orientierung durchführen. Es wird beispielhaft angenommen, dass die Gitterpunkte des Gitters 900 in ihren Koordinaten vorab nicht bekannt sind, sodass hier keine gestrichelte Fehlerellipse zum Punkt 910 existiert, sondern nur die durchgezogene Fehlerellipse 901 nach einer durchgeführten Netzausgleichung.

Weiterhin sei angenommen, dass die Genauigkeit der Orientierung und die Genauigkeit der Position des Smartphones 10 mittels einer Netzausgleichung verbessert werden sollen. Denn der vom Smartphone 10 selbst bestimmte Orientierungswinkel und die mittels des GPS-Empfängers 15 bestimmte Position haben eine zu geringe Genauigkeit, um beispielsweise ein an der Wand der Halle 1 aufgehängtes Gemälde aufzunehmen. In Fig. 4 ist diese Winkelgenauigkeit durch das gestrichelt dargestellte Kreissegment 1001 dargestellt. Die Genauigkeit der Position des Smartphones 10 wird durch die gestrichelt dargestellte Fehlerellipse 110 dargestellt. Weiterhin sei angenommen dass auch die Smartphones 20 bis 40 jeweils ihre Position zu einem vorgegebenen Gültigkeitszeitpunkt selbst bestimmt haben, deren Genauigkeit durch die gestrichelt dargestellten Fehlerellipsen 80, 90 bzw. 100 dargestellt sind. Angemerkt sei, dass auch die Positionskoordinaten der drei Smartphonnes 20 bis 40 in der vom Smartphone 10 auszuführenden Netzausgleichung mit verbessert werden können. Weiterhin sei angenommen, dass auch die Smartphones 20 und 30 jeweils ihren Orientierungswinkel selbst bestimmt haben, die durch die gestrichelt dargestellten Kreissegmente 2001 bzw. 3001 repräsentiert werden. Auch diese Orientierungswinkel der Smartphones 20 und 30 können vom Smartphone 10 in der auszuführenden Netzausgleichung mit verbessert werden.

Weiterhin wird angenommen, dass nur die Smartphones 30 und 40 Streckenmessungen mit dem Sensor 17 durchführen können und dass nur die Smartphones 10 bis 30 ihre Kamera nutzen können, um Richtungsmessungen zu allen Punkten eines in der Halle 1 befindlichen Objektgitters 900 und zu den jeweils beiden anderen Smartphones durchzuführen. Weiterhin sei vereinfachend angenommen, dass jedes der Smartphones 10 bis 30 bezüglich seiner drei Orientierungswinkel in jeweils 2 Orientierungswinkeln exakt bestimmt ist und nur der dritte Orientierungswinkel zu bestimmen sei. Dieser zu bestimmende Orientierungswinkel sei die Rotation um die senkrechte Achse zur X-Y-Ebene eines übergeordneten Objektraumkoordinatensystems, welches in Fig. 6 mit 203 bezeichnet ist. In der vom Smartphone 10 auszuführenden Netzausgleichung können diese Orientierungswinkel für die Smartphones 10 bis 30 und die Positionen der Smartphones 10 bis 40 mittels eines geeigneten gemeinsamen Gleichungssystem verbessert geschätzt werden. Hierbei können in dem Gleichungssystem auch die Standardabweichungen dieser Orientierungen und Positionen bestimmt werden.

Ferner sei angemerkt, dass in einer Netzausgleichung, in der, wie hinsichtlich Fig. 4 angenommen, mindestens ein Orientierungswinkel mindestens der Kommunikationseinrichtung 10 bestimmt werden soll und in der die Punkte des geometrischen Lagenetzes, also die Positionen der beteiligten Kommunikationseinrichtungen 10 bis 40, nicht als bekannt und unkorrigierbar angenommen werden, neben der Orientierung auch die Koordinaten der Positionen der beteiligten Kommunikationseinrichtungen 10 bis 40 ebenfalls als Unbekannte in der Netzausgleichung mit geschätzt werden können.

Die Positionen der Kommunikationseinrichtungen 10 bis 40 in Fig. 4 können zumindest für den dargestellten Zeitpunkt als die Punkte eines temporär stabilen geometrischen Lagenetzes betrachtet werden. Ein solches geometrisches Lagenetz, wie in den Figuren 4 und 5 gezeigt, kann alle Koordinatenrichtungen, somit auch die Koordinaten in einer Ebene und zusätzlich in der Höhe eines 3-dimensionalen Netzes umfassen. Die das temporär stabile geometrische Lagenetz bildenden Punkte werden vorzugsweise durch die Ursprungskoordinaten lokaler, kommunikationseinrichtungsfester Koordinatensysteme, welche jeweils bezüglich einer der Kommunikationseinrichtungen 10 bis 40 definiert werden, festgelegt. Auch die lokalen Koordinatensysteme können ebenfalls als eine temporär starre Anordnung betrachtet werden. Von den Smartphones durchgeführte Messungen werden algebraisch auf die Ursprungskoordinaten des jeweiligen lokalen Koordinatensystems bezogen.

Ein solches kommunikationseinrichtungsfestes lokales 3D-Koordinatensystem 200 mit einem Ursprung 192 ist in Fig. 6 hinsichtlich des Smartphones 10 dargestellt. Die Fig. 6 zeigt lediglich den GPS-Empfänger 15 und eine Bildebene 201 der Kamera 8. Die Bildebene 201 wird durch die Achsen X' und Y' eines lokalen kommunikationseinrichtungsfesten 2D-Koordinatensystems 202 festgelegt. Ein Punkt 193 bildet den Hauptpunkt in der Bildebene 201, der durch einen Hauptstrahl 1931 bestimmt ist, welcher senkrecht auf der Bildebene 201 steht und durch das Projektionszentrum 192 der Kamera 8, welches mit dem Ursprung 192 des lokalen 3D-Koordiantensystems 200 zusammenfällt. Die Kamera 8 bilde beispielhaft und vereinfachend das Modell einer Lochbildkamera mit der Brennweite C. Brennweite C und Hauptpunkt 193 legen die innere Orientierung der Kamera 8 fest.

Die Definition eines lokalen 3D-Koordinatensystems bezüglich einer Kamera ist dem Fachmann aus der Photogrammetrie, einem Teilgebiet der Geodäsie, bekannt und wird kurz erläutert.

Das lokale Koordinatensystem 200 kann konstruktiv realisiert und/oder vorab statistisch bestimmt und/oder in einer Netzausgleichung simultan mit bestimmt werden. Fig. 6 zeigt das lokale 3D-Koordinatensystem 200, welches bezüglich eines festen Antennenbezugspunktes 191 des GPS-Empfängers 15 konstruktiv festgelegt ist. Das lokale Koordinatensystem 200 wird als Translation eines lokalen Bildkoordinatensystems 202 entlang des Hauptstrahles 1931 des Objektives eines Linsensystems der Kamera 8 mit der Brennweite C definiert wird. Alle metrischen und/oder richtungsbezogenen und/oder winkelbezogenen Messungen des Smartphones 10 sind eindeutig bezüglich des lokalen Koordinatensystem 200 darstellbar, wobei das lokale Koordinatensystem 200 des Smartphones 10 und die lokalen Koordinatensysteme der Kommunikationseinrichtungen 20 und 30 in das übergeordnete Raumkoordinatensystem 203 transformierbar sind. Die Transformationsparameter, wie zum Beispiel die Orientierungswinkel Omega 205, Phi 206 und Kappa 207 sowie der Translationsvektor, der vom Ursprung 192 des lokalen Koordinatensystems 200 zum Ursprung 194 des übergeordneten Raumkoordinatensystems 203 verläuft, können in einer Netzausgleichung simultan mit geschätzt werden. Angemerkt sei, dass das lokale Koordinatensystem 200 des Smartphones 10 derart definiert ist, dass seine drei Achsen X", Y" und Z" sowie der Ursprung 192 durch das Kameramodell festgelegt werden und die Sensoren 9 und 17, die keine kamerabasierten Messungen durchführen, zusätzlich geometrisch auf das Kameramodell bezogen werden, wobei der Ursprung 192 des lokalen Koordinatensystems 200 das Projektionszentrum der Kamera bildet, und ein Antennenreferenzpunkt 191 des GPS-Empfängers vorzugsweise die Position der Kommunikationseinrichtung 10 definiert. Für den Antennenreferenzpunkt 191 kann eine GPS Koordinate im WGS84 Koordinatensystem vom GPS Empfänger geliefert werden. Vom festen Referenzpunkt 191 gelangt man über einen festen und bekannten Offset-Vektor 204 zum Hauptpunkt 193 des lokalen Koordinatensystems 202. Für die Orientierungswinkel Omega 205, Phi 206 und Kappa 207 sind in Fig. 6 keine Werte eingezeichnet. Durch die dargestellten gebogenen Pfeilbänder werden lediglich die Drehrichtungen um die zugehörigen Achsen X", Y" und Z" dargestellt.

Der Ursprung 192 des lokalen Koordinatensystems 200 kann auch in einem Ausgleichungsprozess bezüglich des übergeordneten Raumkoordinatensystems 203 bestimmt werden. Somit kann auch der Punkt, der die Position der Kommunikationseinrichtung 10 im Lagenetz definiert, in einem Ausgleichungsprozess direkt in dem übergeordneten Raumkoordinatensystem 203 bestimmt werden, sofern die Geometrie der beteiligten Kommunikationseinrichtungen 10 bis 40 und die Überbestimmung dieses ermöglichen. Dies ist dem geödätischen Fachmann bekannt.

Richtungsbeobachtungen bzw. Richtungsmessungen, aus denen das Smartphone 10 Orientierungsinformationen gewinnen kann, können durch gemessene Bildkoordinaten im 2D-Bildkoordinatensystem 202, zum Beispiel des Bildpunktes 910' eines Objektraumpunktes 910, durch die bekannte Objektivbrennweite C, den bekannten und festen Hauptpunkt 193, die Lage des Projektionszentrums 192 sowie die drei Orientierungswinkel 205, 206 und 207 und zusätzlich durch die drei Koordinaten des Objektraumpunktes 910 bezüglich des Koordinatensystems 203 algebraisch beschrieben und somit in einer Netzausgleichung mit berücksichtigt werden.

Eine Richtungsmessung zum Objektraumpunkt 910 wird beispielsweise mithilfe eines Beobachtungsstrahls 910c durchgeführt. Verzeichnungsparameter des Objektivs oder weitere mögliche zusätzliche Parameter sind hier nicht berücksichtigt, um die Fig. 6 nicht zu überladen. Alle weiteren, in Fig. 6 nicht dargestellten Messungen von Sensoren, insbesondere den Sensoren 9 und 17, sind in einer Netzausgleichung auf das lokale Koordinatensystem 200 des Smartphones 10 und das übergeordnete Objektraumkoordinatensystem 203 zu beziehen, um die Orientierung und gegebenenfalls die Position des Smartphones 10 und die dazugehörenden Genauigkeiten schätzen zu können.

Nunmehr werden einige Erläuterungen zur Netzausgleichung vorangestellt, die zwar an sich bekannt sind, das Verständnis der Erfindung aber erleichtern werden.

In einem Netzausgleichungsprozess können stochastisch definierte Orientierungen und gegebenenfalls Positionen, die entweder aus genäherten Berechnungen zum im Wesentlichen gleichen Zeitpunkt bestimmt sind, oder aus zu einem früheren Zeitpunkt geltenden Messungen bestimmt sind, als spezielle Beobachtungen genutzt werden, wobei diese stochastisch definierten Orientierungen und Positionen im Ausgleichungsprozess auch eine Verbesserung erhalten können. Dies ist einem geodätischen Fachmann bekannt.

Ist wenigstens die Kommunikationseinrichtung 10 beweglich, so ist in der Regel der Zeitpunkt einer Messung von und zu der Kommunikationseinrichtung 10 von Bedeutung, um in einer Netzausgleichung alle Größen auf einen einzigen Zeitpunkt beziehen zu können, um damit temporär ein stabiles geometrisches Lagenetz aller beteiligter Kommunikationseinrichtungen, d.h. eine Momentaufnahme der Konstellation der Kommunikationseinrichtungen 10 bis 40 zu definieren, wie dies in den Figuren 4 und 5 der Fall ist. Liegen Unterschiede in den Zeitpunkten der Bestimmung einzelner Eingabegrößen - das können Beobachtungswerte, Orientierungsinformationen und Positionsinformationen sein - einer Netzausgleichung vor, so kann deren Auswirkung abgeschätzt, toleriert oder durch Anbringung von Korrekturen an den Absolutwerten der Eingabegrößen und/oder deren Genauigkeiten mindestens teilweise korrigiert werden. Dies ist dem geodätischen Fachmann bekannt.

Die Festlegung der Koordinaten kann in unterschiedlicher Art und Weise bewirkt werden, so zum Beispiel auch durch fehlerfreie und/oder statistisch basierte Vorgaben und/oder durch algebraische spezielle Restriktionen zur Festlegungen einer freien Netzausgleichung. Dieses ist dem geodätischen Fachmann bekannt.

Die Festlegung der Koordinaten hängt beispielsweise davon ab, ob als Zielkoordinatensystem ein absolut definiertes Koordinatensystem benötigt wird oder ein beliebiges Berechnungskoordinatensystem zur Darstellung relativer ausgeglichener Zielgrößen ausreicht.

Die Frage des Zielkoordinatensystems hat auch eine Auswirkung darauf, ob man eine Netzausgleichung in einem freien Netz durchführt, dessen Festlegung keinen negativen Einfluss auf die statistisch basierte Suche nach grob fehlerhaften Eingabefehlern hat. Dieses ist dem geodätischen Fachmann bekannt.

Ein Koordinatensystem für die Netzausgleichung kann zum Beispiel als nicht reines Berechnungskoordinatensystem eines freien Netz festgelegt werden, bei dem die Eingabegrößen, die in der Ausgleichung algebraisch von den Koordinaten des Ausgleichungskoordinatensystems abhängig sind, durch eine ausreichende Anzahl dieser Koordinaten im Ausgleichungsprozess vorgegeben werden, zum Beispiel als fehlerfreie Größen unter Zwang oder als stochastisch definierte Größen, wie zum Beispiel eine Koordinate und deren Standardabweichung. Eine Netzausgleichung kann auch in einem Koordinatensystem durchgeführt werden, das ein teilweise freies Netz ist, also in welchem nicht alle Koordinatensystemparameter durch die Regeln des freien Netzes bestimmt werden, so zum Beispiel, wenn die Höhe der Punkte fehlerfrei bekannt sein sollen, aber die Koordinaten der Horizontalebene in einem freien Netz ausgeglichen werden. Dieses ist dem geodätischen Fachmann bekannt.

Durch die Vorgabe von Koordinaten unter Zwang und/oder stochastisch können freie, teilfreie und unter Zwang oder stochastisch definierte Netzausgleichungen und deren Berechnungskoordinatensysteme in unterschiedlichen Kombinationen per algebraischer Definitionen erzeugt werden. Dieses ist dem geodätischen Fachmann bekannt.

Wir kehren nunmehr zu Fig. 4 zurück.

Wie bereits erwähnt, soll die Orientierung und Position zumindest des Smartphones 10 unter Anwendung einer Netzausgleichung verbessert werden. Zur Vereinfachung der nachfolgenden Erläuterung wird nur die X-Y-Objektraumebene dargestellt, wobei sich alle Punkte der Smartphones 10 bis 40 in einer Parallelebene zur der X-Y-Ebene befinden.

Das Smartphone 10 kann dazu ausgebildet sein, automatisch zu erkennen, ob seine Orientierung und Position verbessert werden soll. Folglich kann das Smartphone 10 automatisch oder ein Nutzer manuell das Smartphone 10 veranlassen, eine Netzausgleichung oder, wenn erforderlich, eine Folge von Netzausgleichungen zur Verbesserung der Orientierungsgenauigkeit und Positionsgenauigkeit durchzuführen.

Nach der Aktivierung eines Programms "Verbesserung meiner Orientierung", welches im Speicher 12 abgelegt sein kann, beginnt das Smartphone 10 zunächst geeignete Kommunikationseinrichtungen zu suchen, die wenigstens zu einem vorgebbaren Gültigkeitszeitpunkt miteinander kommunizieren und als Punkte eines temporär stabilen Lagenetzes betrachtet werden können, um in einer Netzausgleichung zur Verbesserung der Orientierung und, wenn gewünscht, der Position des Smartphones 10 berücksichtigt werden zu können.

Beim vorliegenden Beispiel sei angenommen, dass das Smartphone 10 in der Lage ist, in Verbindung mit der im Kartenspeicher 13 abgelegten digitalen Karte, welche das Messegelände wiedergibt, und unter Steuerung des Mikroprozessors 18 Kommunikationseinrichtungen zu suchen, die sich in der Halle 1 oder in einem vorbestimmten Abstand um die Halle 1 herum aufhalten. Die entsprechenden Anweisungen sind zum Beispiel im Programmspeicher 12 abgespeichert und können vom Mikroprozessor 18 ausgelesen und ausgeführt werden. Diesem Kriterium folgend hat das Smartphone 10 die Smartphones 20 bis 40 gefunden und Kontakt zu ihnen aufgenommen. Bei einer beispielhaften Ausführung fordert das Smartphone 10 die Smartphones 20 bis 40 auf, zu einem vorgegebenen Gültigkeitszeitpunkt alle möglichen Beobachtungen zu benachbarten Smartphones durchzuführen und die gemessenen Beobachtungswerte sowie ihre eigenen Orientierungs- und/oder Positionsinformationen zu ihm zu übertragen. Das Smartphone 10 führt zum gleichen Gültigkeitszeitpunkt wie die Smartphones 20 bis 40 seine eigenen Messungen durch.

Alternativ könnte diese Suchfunktion auch der Server 120 durchführen und das Suchergebnis dem Smartphone 10 mitteilen. Alternativ könnte auch der Server 120 die Smartphones 10 bis 40 auffordern, zu einem vorgegebenen Gültigkeitszeitpunkt alle möglichen Beobachtungen zu benachbarten Smartphones durchzuführen und die gemessenen Beobachtungswerte sowie ihre eigenen Orientierungs- und/oder Positionsinformationen zu ihm zu übertragen.

Bei dem erläuterten Ausführungsbeispiel erkennt das Smartphone 40, dass nur der Sensor 15 und der Sensor 17 zur Verfügung steht, um zum Gültigkeitszeitpunkt eine Positionsbestimmung und eine Entfernungsmessung 70 zum Smartphone 10 durchzuführen. Das Smartphone 40 veranlasst die Messungen zum Gültigkeitszeitpunkt und überträgt den gemessenen Beobachtungswert der Strecke, der die relative Position zwischen dem Smartphone 40 und dem Smartphone 10 definiert, sowie seine zum Gültigkeitszeitpunkt ermittelte Positionsinformation, deren Genauigkeit durch die Fehlerellipse 100 dargestellt ist, zum Smartphone 10. Die empfangenen Daten, das sind insbesondere der Beobachtungswert der Strecke, die Positionsinformation und der dazugehörende Gültigkeitszeitpunkt werden im Speicher 11 abgelegt.

Gesteuert durch den Mikroprozessor 18 des Smartphones 10 führt die Kamera 8 des Smartphones 10 zum Gültigkeitszeitpunkt eine Richtungsmessung zum Smartphone 30 und eine Richtungsmessung zum Smartphone 20 durch, was durch den Beobachtungsstrahl 130c bzw. 50c dargestellt ist. Aus den Richtungsmessungen kann das Smartphone 10 Beobachtungswerte bestimmen, welche die relative Orientierung zwischen dem Smartphone 10 und dem Smartphone 20 und die relative Orientierung zwischen dem Smartphone 10 und dem Smartphone 30 definieren. Diese Beobachtungswerte und der dazugehörende Gültigkeitszeitpunkt werden ebenfalls im Speicher 11 abgelegt. Im Speicher 11 werden zudem die vom Smartphone 10 zum Gültigkeitszeitpunkt ermittelte Orientierungsinformation, deren Genauigkeit durch das gestrichelte Kreissegment 1001 dargestellt ist, und die zum Gültigkeitszeitpunkt ermittelte Positionsinformation, deren Genauigkeit durch die Fehlerellipse 110 dargestellt ist, abgelegt. Zudem steuert der Mikroprozessor 18 die Kamera 8 an, um eine weitere Richtungsmessung zum Gitterpunkt 910 mittels eines Beobachtungsstrahls 91c durchzuführen. Auch dieser Beobachtungswert kann im Speicher 11 abgelegt werden.

Auch die Smartphones 20 und 30 sind in der Lage, zum Gültigkeitszeitpunkt jeweils eine Richtungsmessung zum Raumpunkt 910 durchzuführen, was schematisch durch einen Beobachtungsstrahl 93c bzw. 92c zum Gitterpunkt 910 dargestellt ist. Auch diese Beobachtungswerte werden zum Smartphone 10 übertragen und im Speicher 11 abgelegt.

An dieser Stelle sei noch einmal betont, dass alle Messungen im Wesentlichen zu dem vom Smartphone 10 vorgegebenen Gültigkeitszeitpunkt durchgeführt werden.

Das Smartphone 30 erkennt, dass es zum Gültigkeitszeitpunkt seine Positionsinformation und Orientierungsinformation bestimmen sowie mittels des Sensors 17 eine Streckenmessung 60 zum Smartphone 20 durchführen kann. Die Genauigkeit der zum Gültigkeitszeitpunkt ermittelten Positionsinformation ist durch die Fehlerellipse 90 dargestellt, während die Genauigkeit der zum Gültigkeitszeitpunkt durch den Sensor 9 ermittelten Orientierungsinformation durch das gestrichelte Kreissegment 3001 dargestellt ist. Die Positions- und Orientierungsinformationen werden zusammen mit dem Gültigkeitszeitpunkt und dem Beobachtungswert der Strecke, der die relative Lage zwischen dem Smartphone 20 und dem Smartphone 30 festlegt, zum Smartphone 10 übertragen und wiederum im Speicher 11 abgelegt.

Das Smartphone 20 erkennt, dass es zum Gültigkeitszeitpunkt seine Positionsinformation und Orientierungsinformation bestimmen kann. Die Genauigkeit der zum Gültigkeitszeitpunkt ermittelten Positionsinformation ist durch die Fehlerellipse 80 dargestellt, während die Genauigkeit der zum Gültigkeitszeitpunkt durch den Sensor 9 ermittelten Orientierungsinformation durch das gestrichelte Kreissegment 2001 dargestellt ist. Die Positions- und Orientierungsinformationen werden zusammen mit dem Gültigkeitszeitpunkt zum Smartphone 10 übertragen und wiederum im Speicher 11 abgelegt.

Der Mikroprozessor 18 ruft nunmehr den im Speicher 12 abgelegten Optimierungsalgorithmus, welcher das mathematische Modell einer Netzausgleichung beschreibt, auf und führt den Optimierungsalgorithmus aus, wobei die ermittelten Beobachtungswerte sowie Positions- und Orientierungsinformationen als Eingangsgrößen des Optimierungsalgorithmus verwendet werden, um die Orientierung und Position des Smartphones 10 und deren Genauigkeiten zu verbessern. Da es sich auch bei den Smartphones 20 bis 40 um bewegliche Kommunikationseinrichtungen handelt, können auch die Positionskoordinaten der Smartphones 20 bis 40 und deren Genauigkeit sowie die Orientierungswinkel der Smartphones 20 und 30 und deren Genauigkeit als Unbekannte der Netzausgleichung betrachtet und folglich in der Netzausgleich gleich mit verbessert werden. Wie bereits erwähnt, werden die geschätzten Orientierungswinkel und Positionskoordinaten in der Netzausgleichung bezüglich des übergeordneten Raumkoordinatensystems 203 berechnet. Die hierfür erforderlichen Gleichungssysteme sind einem Fachmann auf dem Gebiet der Geodäsie bekannt.

Das Ergebnis der Netzausgleichung, das sind die verbesserten Orientierungswinkel und Genauigkeiten hinsichtlich der Smartphones 10 bis 30 und die verbesserten Positionskoordinaten und Genauigkeiten bezüglich der Smartphones 10 bis 40, wird in der Fig. 4 vereinfacht durch die durchgezogen dargestellten Fehlerellipsen 112, 82, 92 und 102 sowie durch die durchgezogen dargestellten Kreissegmente 1002, 2002 und 3002 angezeigt. Das Smartphone 10 ist dazu in der Lage, die verbesserten Positionsinformationen zu den jeweiligen Smartphones 20 bis 40 und die verbesserten Orientierungsinformationen zu den jeweiligen Smartphones 20 und 30 zu übertragen.

Das Smartphone 10 kann außerdem die Positionen und Genauigkeiten sowie eine z. B. bildliche Wiedererkennungsinformation aller Gitterpunkte des Gitters 900, die in der Netzausgleichung ebenfalls berechnet werden können, im Speicher 11 abspeichern, damit sie in zeitlich folgenden Netzausgleichungen als Zusatzinformationen mit genutzt und verbessert werden können.

Angemerkt ist, dass der Server 120 dazu ausgebildet sein kann, unter Ansprechen auf eine Anfrage des Smartphones 10 all die oben erwähnten Beobachtungswerte, Positionsinformationen und Orientierungsinformationen der betreffenden Smartphones 10 bis 40 im Speicher 123 zu sammeln und in Abhängigkeit davon den auf einer Netzausgleichung basierenden Optimierungsalgorithmus durchzuführen, um insbesondere die Orientierung und die Position des Smartphones 10 sowie die Genauigkeit der Orientierung und Position zu verbessern und diese Daten zum Smartphone 10 zu übertragen.

Ein alternatives Ausführungsbeispiel sieht vor, dass der Server 120 zwar die Orientierungsinformationen, Positionsinformationen und Beobachtungswerte der Smartphones 10 bis 40 empfängt und überwacht, aber das Smartphone 10 lediglich anstößt, die Netzausgleichung dann selbst durchzuführen.

Angemerkt wird, dass der Optimierungsalgorithmus auf einer freien Netzausgleichung basieren kann. Bei einer freien Netzausgleichung wird das übergeordnete Koordinatensystem 203 als reines Berechnungssystem in der Schätzung der Zielgrößen - das sind die Positionskoordinaten und Orientierungen der Smartphones 10 bis 40 - genutzt, welches keinen Zwang auf die ausgeglichenen Beobachtungen ausübt und somit einen strengen statistischen Hypothesentest auf Ausreißer in den Beobachtungen nicht verfälscht. Liegen die Zielgrößen nach Durchführung der Netzausgleichung in einem geeigneten Koordinatensystem vor, so können sie in einem weiteren Verarbeitungsschritt in jedes andere Koordinatensystem transformiert werden. Dieser weitere Verarbeitungsschritt kann auch eine weitere Ausgleichung sein, die die Orientierungen und, wenn gewünscht, die Positionen transformiert, wobei hierbei auch zugleich die Genauigkeiten streng transformiert werden können. Geeignete Transformationsgleichungen, Ausgleichungsstrategien und strenge statistische Hypothesentests hierzu sind dem Fachmann bekannt und es sei hier nur auf die oft verwendete Ähnlichkeitstransformation von Lagenetzen oder die bekannten S- oder T-Transformation bei Freien Netzen der Geodäsie hingewiesen.

Die Wahl der Netzausgleichung, und die Entscheidung, ob einzelne das Koordinatensystem definierende Parameter frei definiert werden (wie bei der freien Netzausgleichung) oder stochastisch zum Beispiel durch Standardabweichungen von größer als Null oder unter Zwang, d. h. zum Beispiel mit Standardabweichung gleich Null, definiert werden, kann vom Mikroprozessor 18 unter Ausführung eines entsprechenden Rechenprogramms vorab entschieden werden, wobei hierbei auch die bekannte Auswirkung auf die Redundanz und insbesondere die Anzahl an notwendigerweise zu beteiligenden mobilen Kommunikationseinrichtungen berücksichtigt werden kann.

Durch die zusätzliche Berücksichtigung einer zeitlichen Abfolge von Ausgleichungen zu verschiedenen Zeitpunkten und ggf. auch noch der gleichzeitigen Berücksichtigung von Modellen für die Bewegung und/oder Bewegungsänderungen der Kommunikationseinrichtungen können unter anderem auch die Geschwindigkeiten und/oder Beschleunigungen geschätzt werden, mit der sich die Orientierung und/oder der Ursprung eines lokalen Koordinatensystems einer Kommunikationseinrichtung ändert. Hierzu können zum Beispiel auch sequentielle Ausgleichungstechniken mit KALMAN Filtern genutzt werden.

Fig. 5 zeigt die Momentaufnahme eines weiteren beispielhaften, drahtlosen Kommunikationsnetz 5", welches wiederum die Smartphones 10 bis 40 umfasst, und zwar zu einem gegebenen Gültigkeitszeitpunkt. Die Smartphones 20 bis 40 wurden vom Smartphone 10 in derselben Weise ausgewählt, wie die in Fig. 4 gezeigten. Die Smartphones 10 bis 30 halten sich in der Halle 1 auf, während sich Smartphone 40 in einem Eingangsbereich vor der Halle 1 befindet. Im Unterschied zu dem in Fig. 4 dargestellten Ausführungsbeispiel werden die beiden Smartphones 20 und 30 nunmehr als statische Kommunikationseinrichtungen mit bekannter Orientierung und Position betrachtet, während die beiden Smartphones 10 und 40 als bewegliche Kommunikationseinrichtungen behandelt werden. Alternativ könnten die beiden Kommunikationseinrichtungen 20 und 30 auch durch stationäre, kommunikationsfähige Kameras mit hochgenauen Positionen und Orientierungen realisiert werden. Wiederum sei angenommen, dass die Smartphones 10 bis 40 als ein temporär stabiles geometrisches Lagenetz mit vier Punkten betrachtet werden können. Angemerkt sei, dass alle in der nachfolgend auszuführenden Netzausgleichung zu berücksichtigenden Eingangsgrößen im Wesentlichen zu einem vorgegebenen Gültigkeitszeitpunkt bestimmt werden. Wiederum sei angenommen, dass die Position und Orientierung des Smartphones 10 mittels einer Netzausgleichung verbessert werden soll.

Angenommen sei zudem, dass die beiden Smartphones 20 und 30, welche zum Gültigkeitszeitpunkt als statische Kommunikationseinrichtungen betrachtet werden, in ihren Orientierungen und Positionen fehlerfrei bekannt sind und in der auszuführenden Netzausgleichung auch keine Korrekturen erhalten. In Fig. 5 ist dieses dadurch gekennzeichnet, dass keine Fehlerellipsen für ihre Positionen eingezeichnet sind und auch die Standardabweichung ihrer horizontalen Orientierung zu Null eingezeichnet ist, wodurch das Kreissegment zur Visualisierung der zweifachen Standardabweichung in 2001 und 3001 zu einer Richtung, also mit Öffnungswinkel Null, entartet.

Ähnlich dem Ausführungsbeispiel nach Fig. 4 hat das Smartphone 10 selbst seine Position mit einer Genauigkeit, welche durch die Fehlerellipse 110 dargestellt ist, sowie seine Orientierung, deren Genauigkeit durch das Kreissegment 1001 dargestellt ist, ermittelt. Die Genauigkeit der Position und der Orientierung soll wiederum mit Hilfe einer Netzausgleichung verbessert werden. Das Smartphone 40 konnte nur seine eigene Position ermitteln, deren Genauigkeit durch die Fehlerellipse 100 dargestellt ist.

Alle vier Kommunikationseinrichtungen 10 bis 40 sind Smartphones, die im Aufbau und in der Funktionsweise dem in Fig. 1 gezeigten Smartphone 10 ähneln, wobei aber einzig das Smartphone 40 keine Messungen zu Orientierungsbestimmungen durchführen kann, da sein Sensor 9 und die Kamera 8 zur Zeit, aus welchen Gründen auch immer, nicht genutzt werden können.

Das Smartphone 10 kann nach Auswertung aller relevanten Daten vorgeben, welche Art von Beobachtungen jede der Kommunikationseinrichtungen 10 bis 40 durchführen soll. Alternativ kann das Smartphone 10 auch jede der Kommunikationseinrichtungen 20 bis 30 auffordern, die Beobachtungen, welche zum Gültigkeitszeitpunkt möglich sind durchzuführen. Im vorliegenden Fall führt keines der Smartphones 10 bis 40 eine Streckenmessung durch.

Stattdessen führt das Smartphone 10 jeweils eine Richtungsmessung 70c zum Smartphone 40 und 130cc zum Smartphone 30 durch und speichert die gewonnenen Beobachtungswerte, welche die relative Orientierung zwischen dem Smartphone 10 und dem Smartphone 40 bzw. zwischen dem Smartphone 10 und dem Smartphone 30 definieren, zusammen mit dem Gültigkeitszeitpunkt im Speicher 11. In ähnlicher Weise führen das Smartphone 30 und das Smartphone 20 Richtungsmessungen 130cc als Gegenrichtung und 50c zum Smartphone 10 durch. Die gewonnenen Beobachtungswerte werden zusammen mit dem Gültigkeitszeitpunkt und den eigenen Positions- und Orientierungsinformationen vom Smartphone 20 bzw. 30 zum Smartphone 10 übertragen und im Speicher 11 abgelegt. Die Richtungsbeobachtungen werden durch die jeweiligen Kameras der Smartphones durchgeführt. Zudem können die Smartphones 10 bis 30 Richtungsmessungen zu beliebigen Objektraumpunkten durchführen, wobei nur die Richtungsmessungen 91c, 92c und 93c zum Objektraumpunkt 910 eines Objektgitters 900 dargestellt sind. Die dazugehörenden Beobachtungswerte werden von den Smartphones 20 und 30 zum Smartphone 10 übertragen, in welchem alle Beobachtungswerte bezüglich der Objektraumpunkte im Speicher 11 abgelegt werden. Die aktuelle Positionsinformation des Smartphones 40, dargestellt durch die Fehlerellipse 100, wird ebenfalls zum Gültigkeitszeitpunkt für 40 abgerufen und an das Smartphone 10 gesendet. Das Smartphone 10 erhält alle notwendigen Daten und Zustände, gültig zum Gültigkeitszeitpunkt des Beobachtungen, aller an einer Netzausgleichung zu beteiligenden Smartphones übermittelt und legt diese im Speicher 11 ab. Nunmehr liest der Mikroprozessor 18 alle im Speicher 11 zum gegebenen Gültigkeitszeitpunkt gehörenden Beobachtungswerte, Positions- und Orientierungsinformationen und Zustände der Smartphones 10 bis 40 aus und führt den im Speicher 12 abgelegten Optimierungsalgorithmus, welcher auf einer Netzausgleichung basiert, unter Berücksichtigung der ausgelesenen Daten aus, um die Positionskoordinaten und die Orientierung des Smartphones 10 zu verbessern. Gleichzeitig kann mit der Netzausgleichung auch eine verbesserte Position für das Smartphone 40 berechnet werden. Die verbesserten Ergebnisse der Netzausgleichung sind durch die Fehlerellipsen 102 und 112 sowie dem Kreissegment 1002 symbolisch dargestellt.

In der Netzausgleichung können auch die im Wesentlichen zeitgleich vorliegenden Orientierungsbestimmungen und Positionsbestimmungen, welche die Sensoren 9 und 15, aber nicht die Kamera 8, bereitstellen, berücksichtigt werden.

Zur Vereinfachung der Darstellung wird wieder davon ausgegangen, dass nur die X-Y-Objektraumebene dargestellt wird und sich alle Punkte der Smartphones 10 bis 40 in einer Parallelebene zur der X-Y-Ebene befinden. Es wird weiter vereinfachend angenommen, dass die Smartphones bezüglich zwei ihrer Orientierungswinkel exakt bestimmt sind und nur der dritte Orientierungswinkel des Smartphones 10 zu bestimmen sei. Dieser zu bestimmende Orientierungswinkel sei die Rotation um die senkrechte Achse zur X-Y-Ebene des in Fig. 6 gezeigten Objektraumkoordinatensystems 203. In der Netzausgleichung kann auch diese einfache Rotation für das Smarthone 10 bestimmt und in einem Guss zusammen mit den oben ermittelten Positions- und Orientierungsinformationen sowie Beobachtungswerten berechnet werden. Hierbei werden in einem Gleichungssystem auch die Standardabweichungen der Orientierung und der Positionen bestimmt. Diese Aufgabe könnte, ähnlich wie in Verbindung mit Fig. 4 erläutert, auch von einem Server 120 erledigt werden, der alle erforderlichen Positions- und Orientierungsinformationen sowie Beobachtungswerte von den Smartphones 10 bis 40 erhält, um in einer Netzausgleichung die Position und Orientierung des Smartphones 10 verbessert zu schätzen.

Angemerkt sei an dieser Stelle, dass beispielsweise zu einem späteren Zeitpunkt das Smartphone 10 zur Verbesserung seiner Orientierung und Position eine weitere Netzausgleichung mit stochastischer Definition des Koordinatensystems mit zusätzlichen und/oder wiederholten Messungen durchführen kann.

Im Anwendungsbeispiel nach Fig. 5 könnte der Benutzer des Smartphones 10 in seinem Smartphone 10 eine Zielposition, zum Beispiel den Punkt 777 in der Halle 1 eingeben. Beispielsweise unter Ansprechen auf die eingegebene Zielposition wird nunmehr im Smartphone 10 ein Programm gestartet, mit dessen Hilfe versucht wird, die aktuelle Orientierung und Position des Smartphones 10 zu verbessern. Der Mikroprozessor 18 kann dazu ausgebildet sein, unter Ansprechen auf die im Speicher 13 hinterlegte Karte und auf die vom Benutzer eingegebene Zielposition 777 zu erkennen, ob die aktuelle Messgenauigkeit des GPS-Empfängers 15 und des Sensors 9 sowie die aktuelle Orientierungsgenauigkeit, dargestellt durch den Öffnungswinkel des Kreissegmentes 1001 als zweifache Standardabweichung, ausreichend ist, um eine ausreichend gute Richtungsdarstellung zu erzeugen. Wenn nicht, startet der Mikroprozessor 18 das zuvor beschriebene Programm, um alle erforderlichen Positions- und Orientierungsinformationen sowie Beobachtungswerte der beteiligten Smartphones 10 bis 40 zu sammeln und in einer Netzausgleichung entsprechend zu berücksichtigen.

Der Mikroprozessor 15 kann ferner dazu ausgebildet sein, unter Ansprechen auf die im Speicher 13 hinterlegte Karte und die vom Benutzer eingegebene Zielposition 777 zu erkennen, welche Positionskoordinaten oder welche Richtung der Fehlerellipse verbessert werden sollte und um wie viel Prozent die Orientierungsgenauigkeit mindestens verbessert werden sollte, um eine ausreichend gute Richtungsvorgabe in einem Kameradisplay erzeugen zu können. Im vorliegenden Fall erkennt der Mikroprozessor 18, dass eine Verbesserung der Positionsgenauigkeit der Fehlerellipse 110 vornehmlich senkrecht zur Winkelhalbierenden des ersten Quadranten des X-Y-Koordinatensystems notwendig ist und dass der Orientierungswinkel in der X-Y-Ebene in seiner Genauigkeit verbessert werden muss. Der Mikroprozessor 18 kann die geeigneten zusätzlichen Messungen für die Netzausgleichung auswählen und durchführen lassen.

Je nach Implementierung und/oder aktuellem geometrischen Netzzustand kann das Smartphone 10 das oben beschriebene Verfahren mehrmals nacheinander durchführen. Das bedeutet, dass
a) die Smartphones 20 bis 40 aufgefordert werden, zu einem neuen Gültigkeitszeitpunkt ihre Orientierungswinkel und Positionskoordinaten und deren Genauigkeit zu bestimmen und diese Daten als Informationen zum Smartphone 10 zu übertragen,
b) das Smartphone 10 die Strecken und/oder Richtungen selbst misst und andere Smartphones auffordert Strecken und/oder Richtungen zu messen und die dazugehörenden Beobachtungswerte zum Smartphone 10 zu übertragen, und dass
c) unter Steuerung des Mikroprozessors 18 der auf einer Netzausgleichung basierende Optimierungsalgorithmus zur Bestimmung der Orientierung und, wenn gewünscht, der Positionskoordinaten, der dazugehörenden Genauigkeit und des Gültigkeitszeitpunkts hinsichtlich des Smartphones 10 und gegebenenfalls hinsichtlich der Smartphones 20 bis 40 ausgeführt wird, wobei hierzu auch die für das Smartphone 10 bereits aus anderen Quellen vorliegenden Informationen über seine Orientierung und/oder Positionskoordinaten verwendet werden können.

Denkbar ist jedoch auch, dass bei erneuter Ausführung des auf einer Netzausgleichung basierenden Optimierungsalgorithmus der Orientierungswinkel und, wenn gewünscht, die Positionskoordinaten und deren Genauigkeit bezüglich weiterer beweglichen Kommunikationseinrichtungen und gegebenenfalls weitere Beobachtungswerte mit berücksichtigt werden können. Denkbar ist auch, dass einige der Smartphones 20 bis 40 und/oder einige Gitterpunkte des Gitters 900 und/oder einige Richtungsmessungen zwischen den Smartphones in der weiteren Netzausgleichung nicht mehr berücksichtigt werden. Mit anderen Worten kann das Smartphone 10 zusammen mit anderen beweglichen Kommunikationseinrichtungen ein neue Gruppe innerhalb des Kommunikationsnetzes 5' oder 5" bilden, welche wiederum als temporär stabiles geometrisches Lagenetz betrachtet werden kann, auf welches eine Netzausgleichung angewendet werden kann. Das Smartphone 10 kann dafür sorgen, dass der Optimierungsalgorithmus so oft wiederholt wird, bis sich die Orientierungen und Positionskoordinaten des Smartphones 10 ausreichend verbessert haben.

Wenigstens einige der in den Figuren illustrierten und oben beschriebenen Gesichtspunkte der Erfindung werden nachfolgend noch einmal zusammengefasst, wobei die verwendeten Bezugszeichen nur der besseren Lesbarkeit dienen und nicht den Gegenstand der Erfindung beschränken.

Gemäß einem Aspekt wird ein Verfahren zum Bestimmen der Orientierung wenigstens einer beweglichen, drahtlosen Kommunikationseinrichtung 10 verfügbar gemacht, welches folgende Schritte aufweisen kann:
a1) Bestimmen wenigstens eines ersten Beobachtungswertes, der die relative Orientierung zwischen einer ersten, beweglichen Kommunikationseinrichtung 10 und einer zweiten Kommunikationseinrichtung 20 definiert;
b1) Bereitstellen einer ersten Orientierungsinformation, welche die Orientierung der zweiten Kommunikationseinrichtung 20 festlegt, wobei die Orientierungsinformation Angaben über die Orientierung und deren Genauigkeit enthält; und
b2) Bereitstellen wenigstens einer zweiten Orientierungsinformation, welche die Orientierung der wenigstens einen dritten Kommunikationseinrichtung 30 festlegt, wobei die Orientierungsinformation Angaben über die Orientierung und deren Genauigkeit enthält;
c) Ausführen eines Optimierungsalgorithmus zur Schätzung der Orientierung der ersten, beweglichen Kommunikationseinrichtung und der Genauigkeit der Orientierung in Abhängigkeit von dem ersten sowie der ersten und zweiten Orientierungsinformation, wobei der Optimierungsalgorithmus auf einer Netzausgleichung basiert.

Bessere Schätzwerte können erzielt werden, wenn folgende Schritte zusätzlich ausgeführt werden:
a2) Bestimmen wenigstens eines zweiten Beobachtungswertes, der die relative Orientierung zwischen der ersten, beweglichen Kommunikationseinrichtung 10 und wenigstens einer dritten Kommunikationseinrichtung 30 definiert; und/oder
a3) Bestimmen wenigstens eines dritten Beobachtungswertes, der die relative Lage zwischen der zweiten Kommunikationseinrichtung 20 und der wenigstens einen dritten Kommunikationseinrichtung 30 definiert;
   wobei in Schritt c) der Optimierungsalgorithmus auch in Abhängigkeit von dem zweiten und/oder dem dritten Beobachtungswert ausgeführt wird.

Zu beachten ist, dass die ersten und zweiten Orientierungsinformationen absolute Orientierungen der zweiten bzw. dritten Kommunikationseinrichtung definieren.

Zunächst sei angemerkt, dass mit dem Begriff "bewegliche, drahtlose Kommunikationseinrichtung" mobile Kommunikationseinrichtungen wie zum Beispiel Mobilfunktelefone, Smartphones oder Brillen mit Rechen-, Kamera- und Kommunikationseinheit, wie zum Beispiel die Google Glass Datenbrille, mit geeigneten zusätzlichen Erweiterungen zur Bestimmung von Beobachtungsinformationen erfasst werden.

Anzumerken ist, dass die Orientierung einer Kommunikationseinrichtung vorzugsweise durch drei Orientierungswinkel und deren Genauigkeit festgelegt wird. Die Genauigkeit wiederum wird vorzugsweise durch die Standardabweichung definiert.

Vorteilhafterweise enthalten die in den Figuren 3 bis 5 dargestellten Kommunikationseinrichtungen 10, 20, 30 und 40 jeweils eine Bilderfassungseinrichtung 8, wobei zusätzlich in den Kommunikationseinrichtungen jeweils ein Bildverarbeitungsprogramm gespeichert sein kann.

In diesem Fall kann in Schritt b1) die erste Orientierungsinformation in der zweiten Kommunikationseinrichtung 20 unter Ausführung des Bildverarbeitungsprogramms zur Bestimmung von Beobachtungsstrahlen vom Bildraum in den Objektraum der Kamera der Kommunikationseinrichtung 20 bestimmt werden, wie dies in Fig. 6 dargestellt ist. Die Bilderfassungseinrichtungen können auf dem Modell einer Lochbildkamera basieren.

In ähnlicher Weise kann die zweite Beobachtungsinformation in der dritten Kommunikationseinrichtung 30 bestimmt werden.

Zweckmäßigerweise bilden die erste, bewegliche Kommunikationseinrichtung 10, die zweite Kommunikationseinrichtung 20 und die wenigstens eine weitere Kommunikationseinrichtung 30 temporär ein stabiles geometrisches Lagenetz bezüglich der Ursprünge 192 ihrer lokalen Koordinatensysteme 200, welche, wie in Fig. 6 gezeigt, starr in der jeweiligen Kommunikationseinrichtung festgelegt sind, wobei die lokalen Koordinatensysteme der Kommunikationseinrichtungen temporär ebenfalls als zueinander starr betrachtet werden können.

Ein temporär stabiles geometrisches Lagenetz bedeutet vorzugsweise, dass die ersten und zweiten Orientierungsinformationen, die Beobachtungswerte und gegebenenfalls deren Genauigkeiten, welche als Eingangswerte in der Netzausgleichung verwendet werden, im Wesentlichen zu einem einzigen vorbestimmten Gültigkeitszeitpunkt bestimmt bzw. gemessen werden oder zumindest ausreichend genau auf diesen Zeitpunkt korrigiert wurden.

Der Begriff "temporär" deutet ferner vorzugsweise darauf hin, dass die beteiligten Kommunikationseinrichtungen, wie zum Beispiel die in den Fig. 3 bis 5 dargestellten Kommunikationseinrichtungen 10, 20 und 30 wenigstens während der Zeitpunkte zum Bestimmen der Beobachtungswerte, der Orientierungsinformationen und gegebenenfalls der Positionsinformationen, welche Eingabegrößen zur Ausführung der Netzausgleichung sind, als Lagepunkte eines geometrischen Netzwerkes betrachtet werden können.

Ein "temporär stabiles geometrisches Lagenetz" liegt zum Beispiel auch immer dann vor, wenn alle Eingangsgrößen der Netzausgleichung im Wesentlichen für den gleichen Zeitpunkt gelten, obwohl wenigstens eine Kommunikationseinrichtung, wie zum Beispiel die Kommunikationseinrichtung 10 beweglich ist. Entsprechendes gilt für die relative Orientierung zwischen zwei Kommunikationseinrichtungen und die diese Orientierung bestimmenden Beobachtungen.

Mit anderen Worten bilden die erste, bewegliche Kommunikationseinrichtung 10, die zweite Kommunikationseinrichtung 20 und die wenigstens eine weitere Kommunikationseinrichtung 30 und/oder 40 temporär eine Gruppe, die auch als eine Art ad-hoc-Netz betrachtet werden kann.

Um neben der Orientierung auch die Position der ersten Kommunikationseinrichtung 10 bestimmen zu können, können folgende Schritte ausgeführt werden:
Bereitstellen einer ersten Positionsinformation, welche die Position der zweiten Kommunikationseinrichtung 20 festlegt, wobei die Positionsinformation Angaben über die Positionskoordinaten und deren Genauigkeit enthält;
Bereitstellen einer zweiten Positionsinformation, welche die Position der wenigstens einen dritten Kommunikationseinrichtung 30 festlegt, wobei die Positionsinformation Angaben über die Positionskoordinaten und deren Genauigkeit enthält; und wobei
in Schritt c) der Optimierungsalgorithmus zur Schätzung der Orientierung und der Positionskoordinaten der ersten, beweglichen Kommunikationseinrichtung 10 sowie der Genauigkeit der Orientierung und der Positionskoordinaten auch in Abhängigkeit von der ersten und zweiten Positionsinformation ausgeführt wird.

Die Netzausgleichung dient somit dazu, neben den Orientierungen und ggf. auch Positionskoordinaten auch die Genauigkeiten der Orientierungen und gegebenenfalls die Genauigkeiten der Positionskoordinaten, d.h. zum Beispiel deren Standardabweichung zu bestimmen.

Der Ausdruck "temporär stabiles geometrisches Lagenetz" bedeutet in diesem Fall vorzugsweise, dass auch die Positionskoordinaten der beteiligten Kommunikationseinrichtungen, welche die Lagepunkte des Lagenetzes bilden, im Wesentlichen zu einem einzigen vorbestimmten Gültigkeitszeitpunkt bestimmt bzw. gemessen werden oder zumindest ausreichend genau auf diesen Zeitpunkt korrigiert wurden.

Die Position einer Kommunikationseinrichtung wird vorzugsweise durch die Positionskoordinaten und deren Genauigkeit festgelegt. Die Genauigkeit wiederum wird vorzugsweise durch die Standardabweichung definiert.

Um die Position der ersten Kommunikationseinrichtung 10 noch besser schätzen zu können, können folgende weitere Schritte ausgeführt werden:
Bestimmen wenigstens eines fünften Beobachtungswertes, der die relative Lage zwischen der ersten, beweglichen Kommunikationseinrichtung 10 und der zweiten Kommunikationseinrichtung 20 definiert;
Bestimmen wenigstens eines sechsten Beobachtungswertes, der die relative Lage zwischen der ersten, beweglichen Kommunikationseinrichtung 10 und der wenigstens einen dritten Kommunikationseinrichtung 30 definiert; und/oder Bestimmen wenigstens eines siebten Beobachtungswertes, der die relative Lage zwischen der zweiten Kommunikationseinrichtung 20 und der wenigstens einen dritten Kommunikationseinrichtung 30 definiert; und wobei in Schritt c) der Optimierungsalgorithmus zur Schätzung der Orientierung und der Positionskoordinaten der ersten, beweglichen Kommunikationseinrichtung sowie der Genauigkeit der Orientierung und der Positionskoordinaten auch in Abhängigkeit von dem fünften, sechsten und/oder siebten Beobachtungswert ausgeführt wird.

Ein Verfahren zur Bestimmung der Position der ersten, beweglichen Kommunikationseinrichtung ist in der internationalen Anmeldung Nummer PCT/EP2014/059236, deren Inhalt vollumfänglich hier mit aufgenommen wird, beschrieben.

Mit dem Merkmalen "Schätzung der Orientierung" und "Schätzung der Positionskoordinaten" werden auch die Fälle, nach denen erstmalig eine Orientierung oder Position der ersten Kommunikationseinrichtung 10 bestimmt oder eine aktuelle Orientierung oder aktuelle Position verbessert wird, mit erfasst.

Dank der Verwendung von Beobachtungswerten, d. h. geometrischer Relationen - das sind relative Orientierungen und Lagen - zwischen Kommunikationseinrichtungen und der Verwendung von Orientierungsinformationen und gegebenenfalls Positionsinformationen der zweiten und wenigstens einen dritten Kommunikationseinrichtung kann die Orientierung und ggf. die Position der ersten, beweglichen Kommunikationseinrichtung 10 auch dann bestimmt werden, wenn die erste, bewegliche Kommunikationseinrichtung 10 über keinen eigenen GNSS-fähigen Empfänger und zugleich keinen Bewegungssensor für Translationen oder Rotationen verfügt.

Zusätzlich können Orientierungsinformationen und/oder Positionsinformationen für das Sichtfeld der Kamera einer jeweiligen Kommunikationseinrichtung liegende Objekte 900, 910, welche nicht die beteiligten Kommunikationseinrichtungen 10, 20, 30 und 40 sind, bereitgestellt und bei der Netzausgleichung zur Schätzung der Orientierung und gegebenenfalls der Position der ersten, beweglichen Kommunikationseinrichtung 10 mit berücksichtigt werden.

Ist die zweite und/oder dritte Kommunikationseinrichtung 20, 30 ebenfalls eine bewegliche Kommunikationseinrichtung, kann in Schritt c) unter Ausführung des Optimierungsalgorithmus bei Bedarf auch die Orientierung und deren Genauigkeit und ggf. auch die Position sowie deren Genauigkeit der zweiten und/oder dritten beweglichen Kommunikationseinrichtung berechnet werden. Hierzu kann die erste, bewegliche Kommunikationseinrichtung 10 von der zweiten und/oder dritten Kommunikationseinrichtung 20/30 und/oder einer zentralen Einrichtung 120 aufgefordert werden.

Die Schritte a) und/oder b) und/oder c) können in der ersten, beweglichen Kommunikationseinrichtung 10 und/oder in einer zentralen Einrichtung, d. h. vorzugsweise im Server 120, ausgeführt werden. Wird Schritt c) in der zentralen Einrichtung ausgeführt, werden die in Schritt c) bestimmten Orientierungen und deren Genauigkeit sowie die Positionskoordinaten und deren Genauigkeit von der zentralen Einrichtung 120 zur ersten, beweglichen Kommunikationseinrichtung 10 übertragen. Auf diese Weise kann der Energieverbrauch der ersten, beweglichen Kommunikationseinrichtung 10 deutlich reduziert werden, da erhebliche Rechenleistung von dem Server 120 aufgebracht wird.

Die Beobachtungswerte können zweckmäßigerweise dadurch gewonnen werden, dass zur Bestimmung des ersten und/oder des fünften Beobachtungswertes wenigstens eine Messgröße von der ersten und/oder der zweiten Kommunikationseinrichtung gemessen wird, zur Bestimmung des wenigstens einen zweiten und/oder des sechsten Beobachtungswertes wenigstens eine Messgröße von der ersten und/oder der jeweiligen dritten Kommunikationseinrichtung gemessen wird; und dass zur Bestimmung des wenigstens einen dritten und/oder des siebten Beobachtungswertes wenigstens eine Messgröße von der zweiten und/oder der jeweiligen dritten Kommunikationseinrichtung gemessen wird, wobei jeder Beobachtungswert Angaben über eine räumliche Richtung und/oder einen räumlichen Abstand und/oder einen Winkel enthalten kann, die die relative Orientierung zwischen den beteiligten Kommunikationseinrichtungen definieren bzw. darstellen.

Vorzugsweise wird in der ersten, beweglichen Kommunikationseinrichtung 10 eine Orientierungsinformation unter Ausführung eines Orientierungs-Bestimmungsprogramms, welches auf einem Orientierungsverfahren, insbesondere eines Kreiselsystems basiert, ermittelt, wobei die Orientierungsinformation Angaben über die Orientierung der ersten, beweglichen Kommunikationseinrichtung 10 und die Genauigkeit der Orientierung enthält. Vorzugsweise wird alternativ oder zusätzlich in der ersten, beweglichen Kommunikationseinrichtung 10 eine Positionsinformation unter Ausführung eines Positions-Bestimmungsprogramms, welches auf einem Ortungsverfahren, insbesondere einem GNSS-basierten oder einem WLAN-basierten Ortungsverfahren basiert, ermittelt, wobei die Positionsinformation Angaben über die Positionskoordinaten der ersten, beweglichen Kommunikationseinrichtung 10 und die Genauigkeit der Positionskoordinaten enthält. In Schritt c) kann dann die Orientierungsinformation und/oder die Positionsinformation der ersten, beweglichen Kommunikationseinrichtung 10 in der Netzausgleichung mit verarbeitet werden.

Um die Flexibilität bei der Orientierungsbestimmung zu erhöhen, können wenigstens in der ersten, beweglichen Kommunikationseinrichtung 10 unterschiedliche Optimierungsalgorithmen zur Schätzung von Orientierungen und deren Genauigkeiten und/oder der Positionskoordinaten und deren Genauigkeiten gespeichert werden, wobei ein auszuführender Optimierungsalgorithmus unter Ansprechen auf eine vorbestimmte Bedingung ausgewählt wird.

Zweckmäßigerweise werden die erste, bewegliche Kommunikationseinrichtung 10, die zweite Kommunikationseinrichtung 20 und die wenigstens eine dritte Kommunikationseinrichtung 30, 40 unter Berücksichtigung vorbestimmbarer Kriterien ausgewählt. Die Kriterien können u. a. berücksichtigen, dass nur Kommunikationseinrichtungen in vorgegebener Nähe zueinander ausgewählt werden, die Orientierungs- und gegebenenfalls Positionsinformationen mit einer Genauigkeit bereitstellen können, welche helfen, die Orientierung und gegebenenfalls die Position der ersten, beweglichen Kommunikationseinrichtung genauer zu berechnen.

Zweckmäßigerweise kann die Orientierungsinformation und/oder Positionsinformation in der zweiten Kommunikationseinrichtung 20 und/oder der wenigstens einen weiteren Kommunikationseinrichtung 30, 40 unter Ausführung eines an sich bekannten Bestimmungsprogramms für Orientierungen und/oder Positionen ermittelt wird.

Die Orientierungsinformationen und gegebenenfalls die Positionsinformationen und/oder Beobachtungswerte und/oder Gültigkeitszeitpunkte können zwischen den beteiligten Kommunikationseinrichtungen 10, 20 und 30 mittels eines Kommunikationsprotokolls zur drahtlosen Datenübermittlung, insbesondere dem standardisierten Wi-Fi Direct-Protokoll oder LTE Direct-Protokoll, ausgetauscht werden.

Gemäß einem weiteren Aspekt wird eine bewegliche, drahtlose Kommunikationseinrichtung 10 zum Einsatz in einem drahtlosen Kommunikationsnetz 5, 5', 5" geschaffen. Sie weist wenigstens eine drahtlose Kommunikationsschnittstelle 14, 14a auf, welche zum Senden und Empfangen von Orientierungsinformationen und Beobachtungswerten zu bzw. von wenigstens einer anderen Kommunikationseinrichtung 20, 30, 40 ausgebildet ist. Ferner enthält die bewegliche Kommunikationseinrichtung 10 eine erste Speichereinrichtung 11, in welcher wenigstens ein erster Beobachtungswert, der die relative Orientierung zwischen der beweglichen Kommunikationseinrichtung 10 und einer zweiten Kommunikationseinrichtung 20 definiert,
eine erste Orientierungsinformation, welche die Orientierung der zweiten Kommunikationseinrichtung 20 festlegt, wobei die Orientierungsinformation Angaben über die Orientierung und deren Genauigkeit enthält, und wenigstens eine zweite Orientierungsinformation, welche die Orientierung der wenigstens einen dritten Kommunikationseinrichtung 30 festlegt, wobei die Orientierungsinformation Angaben über die Orientierung und deren Genauigkeit enthält, speicherbar sind.
Darüber hinaus weist die bewegliche Kommunikationseinrichtung 10 eine zweite Speichereinrichtung 12 auf, in welcher ein Optimierungsalgorithmus zur Schätzung der Orientierung der beweglichen Kommunikationseinrichtung und der Genauigkeit der Orientierung abgelegt ist, wobei der Optimierungsalgorithmus auf einer Netzausgleichung basiert. In der beweglichen Kommunikationseinrichtung 10 ist eine Steuereinrichtung 18 implementiert, welche dazu ausgebildet ist, den gespeicherten Optimierungsalgorithmus zur Schätzung der Orientierung der beweglichen Kommunikationseinrichtung 10 und der Genauigkeit der Orientierung in Abhängigkeit von dem ersten sowie der ersten und zweiten Orientierungsinformation auszuführen.

Um bessere Schätzwerte zu erzielen, können in der ersten Speichereinrichtung 11 wenigstens ein zweiter Beobachtungswert, der die relative Orientierung zwischen der beweglichen Kommunikationseinrichtung 10 und wenigstens einer dritten Kommunikationseinrichtung 30 definiert, und/oder wenigstens ein dritter Beobachtungswert, der die relative Lage zwischen der zweiten beweglichen Kommunikationseinrichtung 20 und der wenigstens einen dritten Kommunikationseinrichtung 30 definiert, abgelegt werden, wobei die Steuereinrichtung 18 dazu ausgebildet ist, den gespeicherten Optimierungsalgorithmus auch in Abhängigkeit von dem zweiten und/oder dem dritten Beobachtungswert auszuführen.

Um auch die Position der beweglichen Kommunikationseinrichtung 10 berechnen zu können, sind in der ersten Speichereinrichtung 11 eine erste Positionsinformation, welche Angaben über die Positionskoordinaten und deren Genauigkeit hinsichtlich der zweiten Kommunikationseinrichtung 20 enthält,
eine zweite Positionsinformation, welche Angaben über die Positionskoordinaten und deren Genauigkeit hinsichtlich der wenigstens einen dritten Kommunikationseinrichtung 30 enthält, und/oder
wenigstens ein vierter Beobachtungswert, der die relative Lage zwischen der beweglichen Kommunikationseinrichtung 10 und der zweiten Kommunikationseinrichtung 20 definiert, und/oder
wenigstens ein fünfter Beobachtungswert, der die relative Lage zwischen der beweglichen Kommunikationseinrichtung 10 und der wenigstens einen dritten Kommunikationseinrichtung 30 definiert; und/oder
wenigstens ein sechster Beobachtungswert, der die relative Lage zwischen der zweiten Kommunikationseinrichtung 20 und der wenigstens einen dritten Kommunikationseinrichtung 30 definiert, gespeichert. In diesem Fall ist die Steuereinrichtung 18 dazu ausgebildet ist,
den Optimierungsalgorithmus zur Schätzung der Orientierung und zur Schätzung der Positionskoordinaten der beweglichen Kommunikationseinrichtung sowie der Genauigkeit der Orientierung und der Positionskoordinaten auch in Abhängigkeit von der ersten und zweiten Positionsinformation, und/oder dem vierten, und/oder dem fünften und/oder dem sechsten Beobachtungswert auszuführen.

Um einen Beobachtungswert, der die relative Orientierung zwischen der beweglichen Kommunikationseinrichtung 10 und einer weiteren Kommunikationseinrichtung 20, 30 oder 40 definiert, kann die bewegliche, drahtlose Kommunikationseinrichtung 10 wenigstens eine Bilderfassungseinrichtung 8 aufweisen, die dazu ausgebildet ist, die absolute Orientierung der beweglichen Kommunikationseinrichtung 10 zu ermitteln und/oder eine Messgröße zu messen und in Abhängigkeit von der gemessenen Messgröße einen Beobachtungswert zu bestimmen, der die relative Orientierung zwischen zwei Kommunikationseinrichtungen 10, 20, 30, insbesondere zwischen der beweglichen Kommunikationseinrichtung 10 und wenigstens einer weiteren Kommunikationseinrichtung definiert. Alternativ oder zusätzlich kann sie wenigstens eine Messeinrichtung 17 zum Messen einer Messgröße und eine Auswerteeinrichtung 16 aufweisen, die dazu ausgebildet ist, in Abhängigkeit von der gemessenen Messgröße einen Beobachtungswert zu bestimmen, der die relative Lage zwischen zwei Kommunikationseinrichtungen 10, 20, 30, 40, insbesondere zwischen der beweglichen Kommunikationseinrichtung 10 und einer weiteren Kommunikationseinrichtung 20, 30 oder 40 definiert, und/oder
einen GNSS-fähigen Empfänger 15 aufweisen, der zum Empfangen von Positionssignalen ausgebildet ist, um daraus eine Positionsinformation zu bestimmen, die Positionskoordinaten der beweglichen, drahtlosen Kommunikationseinrichtung 10 und die Genauigkeit der Positionskoordinaten enthält, und/oder
einen Bewegungssensor 9 aufweisen, der dazu ausgebildet ist, relative Änderungen von Orientierungen und/oder von Positionen zu bestimmen.

Zweckmäßigerweise ist die Steuereinrichtung 18 dazu ausgebildet, die Orientierungen und/oder Positionskoordinaten der zweiten 20 und/oder der wenigstens einen dritten Kommunikationseinrichtung 30, 40 sowie die Genauigkeit der jeweiligen Orientierung und/oder Positionskoordinaten zu bestimmen, wobei
die drahtlose Kommunikationsschnittstelle 14 zum Senden der Orientierungen und deren Genauigkeiten und/oder der Positionskoordinaten und deren Genauigkeit zu der zweiten Kommunikationseinrichtung 20 und/oder der wenigstens einen dritten Kommunikationseinrichtung 30, 40 und/oder einem Server 120 ausgebildet ist.

Vorteilhafterweise kann die Steuereinrichtung 18 zum mehrmaligen Ausführen des Optimierungsalgorithmus und zur anschließenden Ausführung einer Blockausgleichung und/oder zur Ähnlichkeitstransformation der Orientierungsinformationen und gegebenenfalls der Positionsinformationen des ausgeglichenen Netzes in ein anderes Zielkoordinatensystem ausgebildet sein.

Jedem Beobachtungswert kann ein Gültigkeitszeitpunkt zugeordnet sein und die Orientierungsinformationen und Positionsinformationen können jeweils einen Gültigkeitszeitpunkt enthalten, wobei
die Steuereinrichtung 18 dazu ausgebildet ist, die Orientierungswinkel und Positionskoordinaten der beweglichen, drahtlosen Kommunikationseinrichtung 10 und gegebenenfalls die Orientierungswinkel und Positionskoordinaten der wenigstens zwei anderen Kommunikationseinrichtung 20, 30, 40 sowie die jeweilige Genauigkeit der Orientierungswinkel und die jeweilige Genauigkeit der Positionskoordinaten und einen Gültigkeitszeitpunkt zu bestimmen.

Gemäß einem weiteren Aspekt der Erfindung ist eine zentrale, drahtlose Kommunikationseinrichtung 120 zum Bestimmen der Orientierung wenigstens einer beweglichen, drahtlosen Kommunikationseinrichtung 10 vorgesehen. Die zentrale Kommunikationseinrichtung 120 weist wenigstens eine drahtlose Kommunikationsschnittstelle 122, 122a auf, die zum Senden und Empfangen von Orientierungsinformationen und Beobachtungswerten ausgebildet ist. Ferner ist eine erste Speichereinrichtung vorgesehen, in welcher ein erster Beobachtungswert, der die relative Orientierung zwischen einer ersten, beweglichen Kommunikationseinrichtung 10 und einer zweiten Kommunikationseinrichtung 20 definiert,
eine erste Orientierungsinformation, welche die Orientierung der zweiten Kommunikationseinrichtung 20 festlegt, wobei die Orientierungsinformation Angaben über die Orientierung und deren Genauigkeit enthält, und wenigstens eine zweite Orientierungsinformation, welche die Orientierung der wenigstens einen dritten Kommunikationseinrichtung 30 festlegt, wobei die Orientierungsinformation Angaben über die Orientierung und deren Genauigkeit enthält, gespeichert werden können. Die zentrale Kommunikationseinrichtung 120 weist ferner eine zweite Speichereinrichtung 124 auf, in welcher ein Optimierungsalgorithmus zur Schätzung der Orientierung der ersten, beweglichen Kommunikationseinrichtung 10 und/oder wenigstens einer weiteren beweglichen Kommunikationseinrichtung und der Genauigkeit der Orientierung abgelegt ist, wobei der Optimierungsalgorithmus auf einer Netzausgleichung basiert. Zudem ist in der zentralen Kommunikationseinrichtung 120 eine Steuereinrichtung 18 implementiert, welche dazu ausgebildet ist, den gespeicherten Optimierungsalgorithmus zur Schätzung der Orientierung der ersten, beweglichen Kommunikationseinrichtung 10 und der Genauigkeit der Orientierung in Abhängigkeit von dem ersten Beobachtungswert sowie der ersten und zweiten Orientierungsinformation auszuführen, wobei die drahtlose Kommunikationsschnittstelle 122 zum Senden der geschätzten Orientierung und deren Genauigkeiten zur ersten, beweglichen Kommunikationseinrichtung 10 ausgebildet ist. Um bessere Schätzwerte erzielen zu können, können in der ersten Speichereinrichtung wenigstens ein zweiter Beobachtungswert, der die relative Orientierung zwischen der ersten, beweglichen Kommunikationseinrichtung 10 und der wenigstens einen dritten Kommunikationseinrichtung 30 definiert, und/oder ein dritter Beobachtungswert, der die relative Orientierung zwischen der zweiten Kommunikationseinrichtung 20 und der wenigstens einen dritten Kommunikationseinrichtung 30 definiert,
abgelegt werden. Die Steuereinrichtung 18 ist dann dazu ausgebildet ist, den gespeicherten Optimierungsalgorithmus auch in Abhängigkeit von dem zweiten und/oder dem dritten Beobachtungswert auszuführen.

Die drahtlose Kommunikationsschnittstelle 122 der zentralen Kommunikationseinrichtung 120 kann dazu ausgebildet sein, eine erste Positionsinformation, welche Angaben über die Positionskoordinaten und deren Genauigkeit hinsichtlich der zweiten Kommunikationseinrichtung 20 enthält,
eine zweite Positionsinformation, welche Angaben über die Positionskoordinaten und deren Genauigkeit hinsichtlich der wenigstens einen dritten Kommunikationseinrichtung 30 enthält, und/oder
einen vierten Beobachtungswert, der die relative Lage zwischen der beweglichen Kommunikationseinrichtung 10 und der zweiten Kommunikationseinrichtung 20 definiert, und/oder
einen fünften Beobachtungswert, der die relative Lage zwischen der beweglichen Kommunikationseinrichtung 10 und der wenigstens einen dritten Kommunikationseinrichtung 30 definiert und/oder einen sechsten Beobachtungswert, der die relative Lage zwischen der zweiten Kommunikationseinrichtung 20 und der wenigstens einen dritten Kommunikationseinrichtung 30 definiert, zu empfangen, wobei
die Steuereinrichtung 121 dazu ausgebildet ist,
den Optimierungsalgorithmus zur Schätzung der Orientierung und zur Schätzung der Positionskoordinaten der ersten, beweglichen Kommunikationseinrichtung 10 sowie der Genauigkeit der Orientierung und der Positionskoordinaten auch in Abhängigkeit von der ersten und zweiten Positionsinformation, und/oder dem vierten, und/oder dem fünften und/oder dem sechsten Beobachtungswert auszuführen.

Die Steuereinrichtung 121 kann ferner dazu ausgebildet sein, die Orientierungen und gegebenenfalls Positionskoordinaten der wenigstens zwei anderen Kommunikationseinrichtungen 20, 30 sowie die Genauigkeit der jeweiligen Orientierungen und gegebenenfalls der Positionskoordinaten zu bestimmen, wobei
die drahtlose Datenkommunikationsschnittstelle 122 zum Senden der Orientierungen und deren Genauigkeiten und gegebenenfalls der Positionskoordinaten und deren Genauigkeit zu der jeweiligen anderen Kommunikationseinrichtung 20, 30 ausgebildet sein kann. Alternativ oder zusätzlich kann die Steuereinrichtung 121 zum mehrmaligen Ausführen des wenigstens einen Optimierungsalgorithmus und zur anschließenden Ausführung einer Blockausgleichung und/oder einer Ähnlichkeitstransformation der Orientierungsinformation und Positionsinformationen in ein anderes Koordinatensystem ausgebildet sein.

Vorteilhafterweise ist jedem Beobachtungswert ein Gültigkeitszeitpunkt zugeordnet, wobei die Orientierungsinformationen und Positionsinformationen jeweils einen Gültigkeitszeitpunkt enthalten können. Die Steuereinrichtung 121 kann dazu ausgebildet sein, die Orientierung und gegebenenfalls Positionskoordinaten der beweglichen, drahtlosen Kommunikationseinrichtung 10 und gegebenenfalls die Orientierungen und gegebenenfalls Positionskoordinaten der wenigstens zwei anderen Kommunikationseinrichtung 20, 30, 40 sowie die jeweilige Genauigkeit der Orientierungen und gegebenenfalls der Positionskoordinaten und einen Gültigkeitszeitpunkt zu bestimmen.

Gemäß einem weiteren Aspekt der Erfindung wird ein Computerprogramm geschaffen, welches eine Vielzahl von Anweisungen enthält, die in mehreren drahtlosen Kommunikationseinrichtungen 10-40, 120, von denen wenigstens eine als drahtlose, bewegliche Kommunikationseinrichtung 10 ausgebildet ist, speicherbar sind, wobei die Anweisungen, wenn sie von einem Mikroprozessor 18 der wenigstens einen beweglichen Kommunikationseinrichtung 10 und dem Mikroprozessor wenigstens einer weiteren der drahtlosen Kommunikationseinrichtungen 20-40, 120 ausgelesen und verarbeitet werden, das zuvor erläuterte Verfahren ausführen.

Eine exakte Synchronisation aller Messungen, d. h. der Messungen der Orientierung und gegebenenfalls der Positionen als auch der relativen Orientierung und gegebenenfalls der relativen Lage zwischen zwei Kommunikationseinrichtungen ist zweckmäßig. Hierzu können die beteiligten Kommunikationseinrichtungen 10-40 einen in der Zukunft liegenden Gültigkeitszeitpunkt vereinbaren. Alternativ kann, wenn bereits zahlreiche Orientierungsinformationen und gegebenenfalls Positionsinformationen sowie Beobachtungswerte zu unterschiedlichen Zeitpunkten vorliegen, ein geeigneter Gültigkeitszeitpunkt in an sich bekannter Weise durch Interpolation oder Extrapolation berechnet werden. Maßnahmen zur Synchronisation der Messungen und zur Durchführung der Interpolation oder Extrapolation sind nicht Gegenstand der Erfindung.

Die Netzausgleichung, basierend auf einem unter Zwang und/oder einem stochastisch vorbestimmten Koordinatensystem oder der freien Netzausgleichung, kann auf der Methode der kleinsten Fehlerquadrate basieren.

Der Optimierungsalgorithmus, der eine Netzausgleichung ausführt, kann auf einem funktionalen und statistischen Modell, insbesondere einem Gauß-Markov-Modell oder einem heuristischen Modell basieren.

Für die Netzausgleichung können auch andere Modelle, als das Gauß-Markov-Modell verwendet werden.

## Patentansprüche

1. Verfahren zum Bestimmen der Orientierung einer ersten beweglichen, drahtlosen Kommunikationseinrichtung (10), welche eine digitale Bilderfassungseinrichtung (8) aufweist, mit folgenden Schritten:
a1) Durchführen mit Hilfe der digitalen Bilderfassungseinrichtung (8) der ersten beweglichen Kommunikationseinrichtung (10) von Richtungsmessungen zu einer zweiten Kommunikationseinrichtung (20) und Bestimmen, in der ersten beweglichen Kommunikationseinrichtung (10), von ersten Beobachtungswerten aus den Richtungsmessungen, wobei die ersten Beobachtungswerte die relative Orientierung der ersten beweglichen Kommunikationseinrichtung (10) zu der zweiten Kommunikationseinrichtung (20) zu einem Gültigkeitszeitpunkt definieren;
a2) Durchführen mit Hilfe der digitalen Bilderfassungseinrichtung (8) der ersten beweglichen Kommunikationseinrichtung (10) von Richtungsmessungen zu wenigstens einer dritten Kommunikationseinrichtung (30) und Bestimmen, in der ersten beweglichen Kommunikationseinrichtung (10), von zweiten Beobachtungswerten aus den Richtungsmessungen, wobei die zweiten Beobachtungswerte die relative Orientierung der ersten beweglichen Kommunikationseinrichtung (10) zu der wenigstens einen dritten Kommunikationseinrichtung (30) zum Gültigkeitszeitpunkt definieren; und
a3) Bestimmen von dritten Beobachtungswerten, welche die relative Orientierung der zweiten Kommunikationseinrichtung (20) zu der wenigstens einen dritten Kommunikationseinrichtung (30) zum Gültigkeitszeitpunkt definieren;
b1) Bereitstellen einer ersten Orientierungsinformation, welche die absolute Orientierung der zweiten Kommunikationseinrichtung (20) zum Gültigkeitszeitpunkt festlegt, wobei die Orientierungsinformation Angaben über die absolute Orientierung und deren Genauigkeit enthält; und
b2) Bereitstellen wenigstens einer zweiten Orientierungsinformation, welche die absolute Orientierung der wenigstens einen dritten Kommunikationseinrichtung (30) zum Gültigkeitszeitpunkt festlegt, wobei die Orientierungsinformation Angaben über die absolute Orientierung und deren Genauigkeit enthält;
c) Ausführen eines Optimierungsalgorithmus zur Schätzung der Orientierung der ersten beweglichen Kommunikationseinrichtung (10) und der Genauigkeit der Orientierung in Abhängigkeit von den ersten Beobachtungswerten, den zweiten und dritten Beobachtungswerten sowie der ersten und zweiten Orientierungsinformation, wobei der Optimierungsalgorithmus auf einer Netzausgleichung basiert;
oder mit folgenden Schritten:
a1) Durchführen mit Hilfe der digitalen Bilderfassungseinrichtung (8) der ersten beweglichen Kommunikationseinrichtung (10) von Richtungsmessungen zu einer zweiten Kommunikationseinrichtung (20) und Bestimmen, in der ersten beweglichen Kommunikationseinrichtung (10), von ersten Beobachtungswerten aus den Richtungsmessungen, wobei die ersten Beobachtungswerte die relative Orientierung der ersten beweglichen Kommunikationseinrichtung (10) zu der zweiten Kommunikationseinrichtung (20) zu einem Gültigkeitszeitpunkt definieren;
a2) Durchführen mit Hilfe der digitalen Bilderfassungseinrichtung (8) der ersten beweglichen Kommunikationseinrichtung (10) von Richtungsmessungen zu wenigstens einer dritten Kommunikationseinrichtung (30) und Bestimmen, in der ersten beweglichen Kommunikationseinrichtung (10), von zweiten Beobachtungswerten aus den Richtungsmessungen, wobei die zweiten Beobachtungswerte die relative Orientierung der ersten beweglichen Kommunikationseinrichtung (10) zu der wenigstens einen dritten Kommunikationseinrichtung (30) zum Gültigkeitszeitpunkt definieren;
b1) Bereitstellen einer ersten Orientierungsinformation, welche die absolute Orientierung der zweiten Kommunikationseinrichtung (20) zum Gültigkeitszeitpunkt festlegt, wobei die Orientierungsinformation Angaben über die absolute Orientierung und deren Genauigkeit enthält; und
b2) Bereitstellen wenigstens einer zweiten Orientierungsinformation, welche die absolute Orientierung der wenigstens einen dritten Kommunikationseinrichtung (30) zum Gültigkeitszeitpunkt festlegt, wobei die Orientierungsinformation Angaben über die absolute Orientierung und deren Genauigkeit enthält;
c) Ausführen eines Optimierungsalgorithmus zur Schätzung der Orientierung der ersten beweglichen Kommunikationseinrichtung (10) und der Genauigkeit der Orientierung in Abhängigkeit von den ersten Beobachtungswerten und den zweiten Beobachtungswerten sowie der ersten und zweiten Orientierungsinformation, wobei der Optimierungsalgorithmus auf einer Netzausgleichung basiert;
oder mit folgenden Schritten:
a1) Durchführen mit Hilfe der digitalen Bilderfassungseinrichtung (8) der ersten beweglichen Kommunikationseinrichtung (10) von Richtungsmessungen zu einer zweiten Kommunikationseinrichtung (20) und Bestimmen, in der ersten beweglichen Kommunikationseinrichtung (10), von ersten Beobachtungswerten aus den Richtungsmessungen, wobei die ersten Beobachtungswerte die relative Orientierung der ersten beweglichen Kommunikationseinrichtung (10) zu der zweiten Kommunikationseinrichtung (20) zu einem Gültigkeitszeitpunkt definieren;
a3) Bestimmen von dritten Beobachtungswerten, welche die relative Orientierung der zweiten Kommunikationseinrichtung (20) zu der wenigstens einen dritten Kommunikationseinrichtung (30) zum Gültigkeitszeitpunkt definieren;
b1) Bereitstellen einer ersten Orientierungsinformation, welche die absolute Orientierung der zweiten Kommunikationseinrichtung (20) zum Gültigkeitszeitpunkt festlegt, wobei die Orientierungsinformation Angaben über die absolute Orientierung und deren Genauigkeit enthält; und
b2) Bereitstellen wenigstens einer zweiten Orientierungsinformation, welche die absolute Orientierung der wenigstens einen dritten Kommunikationseinrichtung (30) zum Gültigkeitszeitpunkt festlegt, wobei die Orientierungsinformation Angaben über die absolute Orientierung und deren Genauigkeit enthält;
c) Ausführen eines Optimierungsalgorithmus zur Schätzung der Orientierung der ersten beweglichen Kommunikationseinrichtung (10) und der Genauigkeit der Orientierung in Abhängigkeit von den ersten Beobachtungswerten und den dritten Beobachtungswerten sowie der ersten und zweiten Orientierungsinformation, wobei der Optimierungsalgorithmus auf einer Netzausgleichung basiert.

2. Verfahren nach Anspruch 1, **gekennzeichnet durch** folgende Schritte:
Bereitstellen einer ersten Positionsinformation, welche die Position der zweiten Kommunikationseinrichtung (20) festlegt, wobei die Positionsinformation Angaben über die Positionskoordinaten und deren Genauigkeit enthält; Bereitstellen einer zweiten Positionsinformation, welche die Position der wenigstens einen dritten Kommunikationseinrichtung (30) festlegt, wobei die Positionsinformation Angaben über die Positionskoordinaten und deren Genauigkeit enthält;
und wobei
in Schritt c) der Optimierungsalgorithmus zur Schätzung der Orientierung und der Positionskoordinaten der ersten, beweglichen Kommunikationseinrichtung sowie der Genauigkeit der Orientierung und der Positionskoordinaten auch in Abhängigkeit von der ersten und zweiten Positionsinformation ausgeführt wird.

3. Verfahren nach einem der vorstehenden Ansprüche, **dadurch gekennzeichnet, dass**
die zweite Kommunikationseinrichtung (20) und/oder die wenigstens eine dritte Kommunikationseinrichtung (30) als bewegliche Kommunikationseinrichtung ausgebildet sind.

4. Verfahren nach Anspruch 3,
**dadurch gekennzeichnet, dass**
in Schritt c) ferner die Orientierungen und deren Genauigkeiten und/oder die Positionskoordinaten und die Genauigkeit der Positionskoordinaten der zweiten Kommunikationseinrichtung (20) und/oder der dritten Kommunikationseinrichtung (30) mittels der Netzausgleichung bestimmt werden.

5. Verfahren nach Anspruch 2,
**dadurch gekennzeichnet, dass**
zur Bestimmung der ersten Beobachtungswerte Richtungsmessungen mittels einer digitalen Bilderfassungseinrichtung der zweiten Kommunikationseinrichtung (20) durchgeführt werden; dass
zur Bestimmung der zweiten Beobachtungswerte wenigstens eine Richtungsmessung mittels einer digitalen Bilderfassungseinrichtung der jeweiligen dritten Kommunikationseinrichtung gemessen wird; und dass
zur Bestimmung der dritten Beobachtungswerte wenigstens eine Richtungsmessung mittels der digitalen Bilderfassungseinrichtung der zweiten und/oder der jeweiligen dritten Kommunikationseinrichtung durchgeführt wird, wobei jeder Beobachtungswert Angaben über eine räumliche Richtung und/oder einen räumlichen Abstand und/oder einen Winkel enthalten kann.

6. Verfahren nach einem der vorstehenden Ansprüche, **dadurch gekennzeichnet, dass**
in der ersten, beweglichen Kommunikationseinrichtung (10) eine Orientierungsinformation unter Ausführung eines Orientierungs-Bestimmungsprogramms, welches auf einem Orientierungsverfahren, insbesondere eines Kreiselsystems basiert, ermittelt wird, wobei die Orientierungsinformation Angaben über die Orientierung der ersten, beweglichen Kommunikationseinrichtung (10) und die Genauigkeit der Orientierung enthält, und/oder dass in der ersten, beweglichen Kommunikationseinrichtung (10) eine Positionsinformation unter Ausführung eines Positions-Bestimmungsprogramms, welches auf einem Ortungsverfahren, insbesondere einem GNSS-basierten oder einem WLAN-basierten Ortungsverfahren basiert, ermittelt wird, wobei die Positionsinformation Angaben über die Positionskoordinaten der ersten, beweglichen Kommunikationseinrichtung (10) und die Genauigkeit der Positionskoordinaten enthält, und dass
in Schritt c) die Orientierungsinformation und/oder die Positionsinformation der ersten, beweglichen Kommunikationseinrichtung (10) in der Netzausgleichung mit verarbeitet wird.

7. Verfahren nach einem der vorstehenden Ansprüche, **dadurch gekennzeichnet, dass**
wenigstens in der ersten beweglichen Kommunikationseinrichtung (10) unterschiedliche Optimierungsalgorithmen zur Schätzung von Orientierungen und deren Genauigkeiten und/oder der Positionskoordinaten und deren Genauigkeiten gespeichert werden, und dass
ein auszuführender Optimierungsalgorithmus unter Ansprechen auf eine vorbestimmte Bedingung ausgewählt wird.

8. Verfahren nach einem der vorstehenden Ansprüche, **dadurch gekennzeichnet, dass**
die erste, bewegliche Kommunikationseinrichtung (10), die zweite Kommunikationseinrichtung (20) und die wenigstens eine dritte Kommunikationseinrichtung (30, 40) unter vorbestimmbaren Kriterien ausgewählt werden.

9. Verfahren nach einem der vorstehenden Ansprüche,
**dadurch gekennzeichnet, dass**
die Ausführung der Schritte a1) bis a3), und/oder der Schritt b1), und/oder der Schritt b2) und/oder der Schritt c) unter Steuerung der ersten beweglichen Kommunikationseinrichtung (10) oder einer zentralen Einrichtung (120) ausgeführt werden.

10. Bewegliche, drahtlose Kommunikationseinrichtung (10) zum Einsatz in einem drahtlosen Kommunikationsnetz (5, 5', 5"), mit
- wenigstens einer drahtlosen Kommunikationsschnittstelle (14, 14a), welche zum Senden und Empfangen von Orientierungsinformationen und Beobachtungswerten zu bzw. von einer zweiten Kommunikationseinrichtung (20) und wenigstens einer dritten Kommunikationseinrichtung (30, 40) ausgebildet ist,
- einer ersten Speichereinrichtung (11), in welcher erste Beobachtungswerte, welche die relative Orientierung der beweglichen Kommunikationseinrichtung (10) zu der zweiten Kommunikationseinrichtung (20) definiert,
eine erste Orientierungsinformation, welche die absolute Orientierung der zweiten Kommunikationseinrichtung (20) festlegt, wobei die Orientierungsinformation Angaben über die absolute Orientierung und deren Genauigkeit enthält, und wenigstens eine zweite Orientierungsinformation, welche die absolute Orientierung der wenigstens einen dritten Kommunikationseinrichtung (30, 40) festlegt, wobei die Orientierungsinformation Angaben über die absolute Orientierung und deren Genauigkeit enthält, zweite Beobachtungswerte, welche die relative Orientierung der beweglichen Kommunikationseinrichtung (10) zu der wenigstens einen dritten Kommunikationseinrichtung (30) definiert, und
dritte Beobachtungswerte, welche die relative Orientierung der zweiten beweglichen Kommunikationseinrichtung (20) zu der wenigstens einen dritten Kommunikationseinrichtung (30) definiert, speicherbar sind,
- wenigstens einer digitalen Bilderfassungseinrichtung (8) zum Durchführen einer Richtungsmessung wenigstens zu der zweiten Kommunikationseinrichtung (20), um die ersten Beobachtungswerte zu gewinnen; und zum Durchführen einer Richtungsmessung wenigstens zu der dritten Kommunikationseinrichtung (30), um die zweiten Beobachtungswerte zu gewinnen;
- einer zweiten Speichereinrichtung (12), in welcher ein Optimierungsalgorithmus zur Schätzung der Orientierung der beweglichen Kommunikationseinrichtung (10) und der Genauigkeit der Orientierung abgelegt ist, wobei der Optimierungsalgorithmus auf einer Netzausgleichung basiert, und
- einer Steuereinrichtung (18), welche dazu ausgebildet ist, den gespeicherten Optimierungsalgorithmus zur Schätzung der Orientierung der beweglichen Kommunikationseinrichtung (10) und der Genauigkeit der Orientierung in Abhängigkeit von den ersten Beobachtungswerten, der ersten und zweiten Orientierungsinformation sowie den zweiten und dritten Beobachtungswerten auszuführen,
oder mit
- wenigstens einer drahtlosen Kommunikationsschnittstelle (14, 14a), welche zum Senden und Empfangen von Orientierungsinformationen und Beobachtungswerten zu bzw. von einer zweiten Kommunikationseinrichtung (20) und wenigstens einer dritten Kommunikationseinrichtung (30, 40) ausgebildet ist,
- einer ersten Speichereinrichtung (11), in welcher erste Beobachtungswerte, welche die relative Orientierung der beweglichen Kommunikationseinrichtung (10) zu der zweiten Kommunikationseinrichtung (20) definiert,
eine erste Orientierungsinformation, welche die absolute Orientierung der zweiten Kommunikationseinrichtung (20) festlegt, wobei die Orientierungsinformation Angaben über die absolute Orientierung und deren Genauigkeit enthält, und wenigstens eine zweite Orientierungsinformation, welche die absolute Orientierung der wenigstens einen dritten Kommunikationseinrichtung (30, 40) festlegt, wobei die Orientierungsinformation Angaben über die absolute Orientierung und deren Genauigkeit enthält, und zweite Beobachtungswerte, welche die relative Orientierung der beweglichen Kommunikationseinrichtung (10) zu der wenigstens einen dritten Kommunikationseinrichtung (30) definiert, speicherbar sind,
- wenigstens einer digitalen Bilderfassungseinrichtung (8) zum Durchführen einer Richtungsmessung wenigstens zu der zweiten Kommunikationseinrichtung (20), um die ersten Beobachtungswerte zu gewinnen; und zum Durchführen einer Richtungsmessung wenigstens zu der dritten Kommunikationseinrichtung (30), um die zweiten Beobachtungswerte zu gewinnen;
- einer zweiten Speichereinrichtung (12), in welcher ein Optimierungsalgorithmus zur Schätzung der Orientierung der beweglichen Kommunikationseinrichtung (10) und der Genauigkeit der Orientierung abgelegt ist, wobei der Optimierungsalgorithmus auf einer Netzausgleichung basiert, und
- einer Steuereinrichtung (18), welche dazu ausgebildet ist, den gespeicherten Optimierungsalgorithmus zur Schätzung der Orientierung der beweglichen Kommunikationseinrichtung (10) und der Genauigkeit der Orientierung in Abhängigkeit von den ersten Beobachtungswerten, der ersten und zweiten Orientierungsinformation sowie den zweiten Beobachtungswerten auszuführen,
oder mit
- wenigstens einer drahtlosen Kommunikationsschnittstelle (14, 14a), welche zum Senden und Empfangen von Orientierungsinformationen und Beobachtungswerten zu bzw. von einer zweiten Kommunikationseinrichtung (20) und wenigstens einer dritten Kommunikationseinrichtung (30, 40) ausgebildet ist,
- einer ersten Speichereinrichtung (11), in welcher erste Beobachtungswerte, welche die relative Orientierung der beweglichen Kommunikationseinrichtung (10) zu der zweiten Kommunikationseinrichtung (20) definiert,
eine erste Orientierungsinformation, welche die absolute Orientierung der zweiten Kommunikationseinrichtung (20) festlegt, wobei die Orientierungsinformation Angaben über die absolute Orientierung und deren Genauigkeit enthält, und wenigstens eine zweite Orientierungsinformation, welche die absolute Orientierung der wenigstens einen dritten Kommunikationseinrichtung (30, 40) festlegt, wobei die Orientierungsinformation Angaben über die absolute Orientierung und deren Genauigkeit enthält, und dritte Beobachtungswerte, welche die relative Orientierung der zweiten beweglichen Kommunikationseinrichtung (20) zu der wenigstens einen dritten Kommunikationseinrichtung (30) definiert, speicherbar sind,
- wenigstens einer digitalen Bilderfassungseinrichtung (8) zum Durchführen einer Richtungsmessung wenigstens zu der zweiten Kommunikationseinrichtung (20), um die ersten Beobachtungswerte zu gewinnen;
- einer zweiten Speichereinrichtung (12), in welcher ein Optimierungsalgorithmus zur Schätzung der Orientierung der beweglichen Kommunikationseinrichtung (10) und der Genauigkeit der Orientierung abgelegt ist, wobei der Optimierungsalgorithmus auf einer Netzausgleichung basiert, und
- einer Steuereinrichtung (18), welche dazu ausgebildet ist, den gespeicherten Optimierungsalgorithmus zur Schätzung der Orientierung der beweglichen Kommunikationseinrichtung (10) und der Genauigkeit der Orientierung in Abhängigkeit von den ersten Beobachtungswerten, der ersten und zweiten Orientierungsinformation sowie den dritten Beobachtungswerten auszuführen.

11. Bewegliche, drahtlose Kommunikationseinrichtung nach Anspruch 10,
**dadurch gekennzeichnet, dass**
in der ersten Speichereinrichtung (11) eine erste Positionsinformation, welche Angaben über die Positionskoordinaten und deren Genauigkeit hinsichtlich der zweiten Kommunikationseinrichtung (20) enthält,
eine zweite Positionsinformation, welche Angaben über die Positionskoordinaten und deren Genauigkeit hinsichtlich der wenigstens einen dritten Kommunikationseinrichtung (30) enthält, und/oder wenigstens vierte Beobachtungswerte, welche die relative Orientierung der beweglichen Kommunikationseinrichtung (10) zu der zweiten Kommunikationseinrichtung (20) definiert, und/oder fünfte Beobachtungswerte, welche die relative Lage der beweglichen Kommunikationseinrichtung (10) zu der wenigstens einen dritten Kommunikationseinrichtung (30) definiert; und/oder
sechste Beobachtungswerte, welche die relative Lage zwischen der zweiten Kommunikationseinrichtung (20) und der wenigstens einen dritten Kommunikationseinrichtung (30) definiert, gespeichert sind, und wobei
die Steuereinrichtung (18) dazu ausgebildet ist,
den Optimierungsalgorithmus zur Schätzung der Orientierung und zur Schätzung der Positionskoordinaten der beweglichen Kommunikationseinrichtung sowie der Genauigkeit der Orientierung und der Positionskoordinaten auch in Abhängigkeit von der ersten und zweiten Positionsinformation, und/oder dem vierten, und/oder dem fünften und/oder dem sechsten Beobachtungswert auszuführen.

12. Bewegliche, drahtlose Kommunikationseinrichtung nach Anspruch 10 oder 11,
**gekennzeichnet durch**
wenigstens eine Messeinrichtung (17) zum Messen einer Messgröße und eine Auswerteeinrichtung (16), die dazu ausgebildet ist, in Abhängigkeit von der gemessenen Messgröße einen Beobachtungswert zu bestimmen, der die relative Lage zwischen zwei Kommunikationseinrichtungen (10, 20; 30, 40) definiert, und/oder durch
einen GNSS-fähigen Empfänger (15), der zum Empfangen von Positionssignalen ausgebildet ist, um daraus eine Positionsinformation zu bestimmen, die Positionskoordinaten der beweglichen, drahtlosen Kommunikationseinrichtung und die Genauigkeit der Positionskoordinaten enthält, und/oder durch einen Bewegungssensor (9), der dazu ausgebildet ist, relative Änderungen von Orientierungen und/oder von Positionen zu bestimmen, wobei
die wenigstens eine digitale Bilderfassungseinrichtung (8) dazu ausgebildet ist, die absolute Orientierung der beweglichen, drahtlosen Kommunikationseinrichtung (10) zu ermitteln.

13. Bewegliche, drahtlose Kommunikationseinrichtung nach einem der Ansprüche 10 bis 12,
**dadurch gekennzeichnet, dass**
die Steuereinrichtung (18) dazu ausgebildet ist, die Orientierungen und/oder Positionskoordinaten der zweiten und/oder der wenigstens einen dritten Kommunikationseinrichtung (20, 30, 40) sowie die Genauigkeit der jeweiligen Orientierung und/oder Positionskoordinaten zu bestimmen, und dass die drahtlose Kommunikationsschnittstelle (14) zum Senden der Orientierungen und deren Genauigkeiten und/oder der Positionskoordinaten und deren Genauigkeit zu der zweiten Kommunikationseinrichtung (20) und/oder der wenigstens einen dritten Kommunikationseinrichtung (30) und/oder einem Server (120) ausgebildet ist.

14. Bewegliche, drahtlose Kommunikationseinrichtung nach einem der Ansprüche 10 bis 13, **dadurch gekennzeichnet, dass**
die Steuereinrichtung (18) zum mehrmaligen Ausführen des Optimierungsalgorithmus und zur anschließenden Ausführung einer Blockausgleichung und/oder zur Ähnlichkeitstransformation der Orientierungsinformationen und Positionsinformationen des ausgeglichenen Netzes in ein anderes Zielkoordinatensystem ausgebildet ist.

15. Computerprogramm enthaltend
eine Vielzahl von Anweisungen, die in mehreren drahtlosen Kommunikationseinrichtungen (10-40), von denen wenigstens eine als drahtlose, bewegliche Kommunikationseinrichtung (10-40) ausgebildet ist und eine digitale Bilderfassungseinrichtung aufweist, speicherbar sind, wobei die Anweisungen, wenn sie von einem Mikroprozessor (18) der wenigstens einen beweglichen Kommunikationseinrichtung (10) und dem Mikroprozessor wenigstens einer weiteren der drahtlosen Kommunikationseinrichtungen (20-40) ausgelesen und verarbeitet werden, das Verfahren nach einem der Ansprüche 1 bis 9 ausführen.

## Claims

1. A method for determining the orientation of a first mobile wireless communication device (10) which comprises a digital image capturing device (8), comprising the steps of:
a1) performing direction measurements to a second communication device (20) using the digital image capturing device (8) of the first mobile communication device (10), and determining, on the first mobile communication device (10), first observation values based on the direction measurements, said first observation values defining the relative orientation of the first mobile communication device (10) to the second communication device (20) at a time of validity;
a2) performing direction measurements to at least one third communication device (30) using the digital image capturing device (8) of the first mobile communication device (10), and determining, on the first mobile communication device (10), second observation values based on the direction measurements, said second observation values defining the relative orientation of the first mobile communication device (10) to the at least one third communication device (30) at the time of validity; and
a3) determining third observation values which define the relative orientation of the second communication device (20) to the at least one third communication device (30) at the time of validity;
b1) providing a first orientation information which defines the absolute orientation of the second communication device (20) at the time of validity, said orientation information including information about the absolute orientation and the accuracy thereof; and
b2) providing at least one second orientation information which defines the absolute orientation of the at least one third communication device (30) at the time of validity, said orientation information including information about the absolute orientation and the accuracy thereof;
c) executing an optimization algorithm for estimating the orientation of the first mobile communication device (10) and the accuracy of orientation in dependence of the first observation values, the second and third observation values, and the first and second pieces of orientation information, wherein said optimization algorithm is based on a network adjustment;
or comprising the steps of:
a1) performing direction measurements to a second communication device (20) using the digital image capturing device (8) of the first mobile communication device (10), and determining, on the first mobile communication device (10), first observation values based on the direction measurements, said first observation values defining the relative orientation of the first mobile communication device (10) to the second communication device (20) at a time of validity;
a2) performing direction measurements to at least one third communication device (30) using the digital image capturing device (8) of the first mobile communication device (10), and determining, on the first mobile communication device (10), second observation values based on the direction measurements, said second observation values defining the relative orientation of the first mobile communication device (10) to the at least one third communication device (30) at the time of validity;
b1) providing a first orientation information which defines the absolute orientation of the second communication device (20) at the time of validity, said orientation information including information about the absolute orientation and the accuracy thereof; and
b2) providing at least one second orientation information which defines the absolute orientation of the at least one third communication device (30) at the time of validity, said orientation information including information about the absolute orientation and the accuracy thereof;
c) executing an optimization algorithm for estimating the orientation of the first mobile communication device (10) and the accuracy of the orientation in dependence of the first observation values and the second observation values, and the first and second pieces of orientation information, wherein said optimization algorithm is based on a network adjustment;
or comprising the steps of:
a1) performing direction measurements to a second communication device (20) using the digital image capturing device (8) of the first mobile communication device (10), and determining, on the first mobile communication device (10), first observation values based on the direction measurements, said first observation values defining the relative orientation of the first mobile communication device (10) to the second communication device (20) at a time of validity; and
a3) determining third observation values which define the relative orientation of the second communication device (20) to the at least one third communication device (30) at the time of validity;
b1) providing a first orientation information which defines the absolute orientation of the second communication device (20) at the time of validity, said orientation information including information about the absolute orientation and the accuracy thereof; and
b2) providing at least one second orientation information which defines the absolute orientation of the at least one third communication device (30) at the time of validity, said orientation information including information about the absolute orientation and the accuracy thereof;
c) executing an optimization algorithm for estimating the orientation of the first mobile communication device (10) and the accuracy of the orientation in dependence of the first observation values and the third observation values, and the first and second pieces of orientation information, wherein said optimization algorithm is based on a network adjustment.

2. The method according to claim 1,
**characterized by** the steps of:
providing a first position information which defines the position of the second communication device (20), wherein said position information includes information about the position coordinates and the accuracy thereof;
providing a second position information which defines the position of the at least one third communication device (30), wherein said position information includes information about the position coordinates and the accuracy thereof;
and wherein
step c) comprises performing the optimization algorithm for estimating the orientation and the position coordinates of the first mobile communication device and the accuracy of the orientation and of the position coordinates also in dependence of said first and second position information.

3. The method according to any one of the preceding claims, **characterized in that**
the second communication device (20) and/or the at least one third communication device (30) are in the form of a mobile communication device.

4. The method according to claim 3, **characterized in that** step c) furthermore comprises determining the orientations and accuracies thereof and/or the position coordinates and the accuracy of the position coordinates of the second communication device (20) and/or of the third communication device (30) by said network adjustment.

5. The method according to claim 2, **characterized in that** for determining the first observation values, direction measurements are performed by a digital image capturing device of the second communication device (20); that for determining the second observation values, at least one direction measurement is performed by a digital image capturing device of the respective third communication device; and that
for determining the third observation values, at least one direction measurement is performed by the digital image capturing device of the second and/or the respective third communication device; wherein
each observation value may include information about a spatial direction and/or a spatial distance and/or an angle.

6. The method according to any one of the preceding claims, **characterized in that**
in the first mobile communication device (10), orientation information is determined by executing an orientation determination program that is based on an orientation technique, in particular of a gyro system, wherein the orientation information includes information about the orientation of the first mobile communication device (10) and the accuracy of the orientation; and/or that
in the first mobile communication device (10), position information is determined by executing a position determination program that is based on a positioning technique, in particular a GNSS-based or WLAN-based positioning technique, wherein the position information includes information about the position coordinates of the first mobile communication device (10) and the accuracy of the position coordinates; and that step c) also comprises processing the orientation information and/or the position information of the first mobile communication device (10) in said network adjustment.

7. The method according to any one of the preceding claims, **characterized in that**
at least the first mobile communication device (10) stores different optimization algorithms for estimating orientations and accuracies thereof and/or the position coordinates and accuracies thereof; and that an optimization algorithm to be executed is selected in response to a predetermined condition.

8. The method according to any one of the preceding claims, **characterized in that**
the first mobile communication device (10), the second communication device (20) and the at least one third communication device (30, 40) are selected under predeterminable criteria.

9. The method according to any one of the preceding claims, **characterized in that**
steps a1) through a3) and/or step b1) and/or step b2) and/or step c) are executed under control of the first mobile communication device (10) or of a central device (120) .

10. A mobile wireless communication device (10) for use in a wireless communication network (5, 5', 5"), comprising
- at least one wireless communication interface (14, 14a) adapted to transmit and receive orientation information and observation values to and from a second communication device (20) and at least one third communication device (30, 40);
- a first memory device (11) adapted to store first observation values which define the relative orientation of the mobile communication device (10) to the second communication device (20),
a first orientation information which defines the absolute orientation of the second communication device (20), wherein said orientation information includes information about the absolute orientation and the accuracy thereof, and
at least one second orientation information which defines the absolute orientation of the at least one third communication device (30, 40), wherein said orientation information includes information about the absolute orientation and the accuracy thereof,
second observation values defining the relative orientation of the mobile communication device (10) to the at least one third communication device (30), and third observation values defining the relative orientation of the second mobile communication device (20) to the at least one third communication device (30);
- at least one digital image capturing device (8) for performing a direction measurement to at least the second communication device (20) in order to obtain the first observation values, and for performing a direction measurement to at least the third communication device (30) in order to obtain the second observation values;
- a second memory device (12) which stores an optimization algorithm for estimating the orientation of the mobile communication device (10) and the accuracy of the orientation, wherein the optimization algorithm is based on a network adjustment; and
- a control device (18) adapted to execute the stored optimization algorithm for estimating the orientation of the mobile communication device (10) and the accuracy of the orientation in dependence of the first observation values, the first and second orientation information and the second and third observation values;
or comprising
- at least one wireless communication interface (14, 14a) adapted to transmit and receive orientation information and observation values to and from a second communication device (20) and at least one third communication device (30, 40);
- a first memory device (11) adapted to store first observation values which define the relative orientation of the mobile communication device (10) to the second communication device (20),
a first orientation information which defines the absolute orientation of the second communication device (20), wherein said orientation information includes information about the absolute orientation and the accuracy thereof, and
at least one second orientation information which defines the absolute orientation of the at least one third communication device (30, 40), wherein said orientation information includes information about the absolute orientation and the accuracy thereof, and
second observation values defining the relative orientation of the mobile communication device (10) to the at least one third communication device (30);
- at least one digital image capturing device (8) for performing a direction measurement to at least the second communication device (20) in order to obtain the first observation values, and for performing a direction measurement to at least the third communication device (30) in order to obtain the second observation values; and
- a second memory device (12) which stores an optimization algorithm for estimating the orientation of the mobile communication device (10) and the accuracy of the orientation, wherein the optimization algorithm is based on a network adjustment; and
- a control device (18) adapted to execute the stored optimization algorithm for estimating the orientation of the mobile communication device (10) and the accuracy of the orientation in dependence of the first observation values, the first and second orientation information and the second observation values;
or comprising
- at least one wireless communication interface (14, 14a) adapted to transmit and receive orientation information and observation values to and from a second communication device (20) and at least one third communication device (30, 40);
- a first memory device (11) adapted to store first observation values which define the relative orientation of the mobile communication device (10) to the second communication device (20),
a first orientation information which defines the absolute orientation of the second communication device (20), wherein said orientation information includes information about the absolute orientation and the accuracy thereof, and
at least one second orientation information which defines the absolute orientation of the at least one third communication device (30, 40), wherein said orientation information includes information about the absolute orientation and the accuracy thereof, and
third observation values defining the relative orientation of the second mobile communication device (20) to the at least one third communication device (30);
- at least one digital image capturing device (8) for performing a direction measurement to at least the second communication device (20) in order to obtain the first observation values;
- a second memory device (12) which stores an optimization algorithm for estimating the orientation of the mobile communication device (10) and the accuracy of the orientation, wherein the optimization algorithm is based on a network adjustment; and
- a control device (18) adapted to execute the stored optimization algorithm for estimating the orientation of the mobile communication device (10) and the accuracy of the orientation in dependence of the first observation values, the first and second orientation information and the third observation values.

11. The mobile wireless communication device according to claim 10, **characterized in that**
the first memory device (11) stores
a first position information which contains information about the position coordinates and the accuracy thereof with regard to the second communication device (20),
a second position information which contains information about the position coordinates and the accuracy thereof with regard to the at least one third communication device (30), and/or
at least fourth observation values which define the relative orientation of the mobile communication device (10) to the second communication device (20), and/or fifth observation values which define the relative position of the mobile communication device (10) to the at least one third communication device (30), and/or sixth observation values which define the relative position between the second communication device (20) and the at least one third communication device (30); and wherein
the control device (18) is adapted to use the optimization algorithm for estimating the orientation and for estimating the position coordinates of the mobile communication device and the accuracy of the orientation and of the position coordinates also in dependence of the first and second position information and/or the fourth and/or fifth and/or sixth observation values.

12. The mobile wireless communication device according to claim 10 or 11, **characterized by**
at least one sensing device (17) for measuring a variable to be measured, and an evaluation device (16) adapted to determine, on the basis of the measured variable, an observation value which defines the relative position between two communication devices (10, 20; 30, 40); and/or by
a GNSS-enabled receiver (15) adapted to receive position signals for determining position information therefrom, which include the position coordinates of the mobile wireless communication device and the accuracy of the position coordinates; and/or by
a motion sensor (9) adapted to determine relative changes in orientations and/or of positions; wherein
the at least one digital image capturing device (8) is adapted to determine the absolute orientation of the mobile wireless communication device (10).

13. The mobile wireless communication device according to any one of claims 10 to 12, **characterized in that** the control device (18) is adapted to determine the orientations and/or position coordinates of the second and/or of the at least one third communication device (20, 30, 40) and the accuracy of the respective orientation and/or position coordinates; and that the wireless communication interface (14) is adapted to send the orientations and accuracies thereof and/or the position coordinates and accuracy thereof to the second communication device (20) and/or to the at least one third communication device (30) and/or to a server (120).

14. The mobile wireless communication device according to any one of claims 10 to 13, **characterized in that** the control device (18) is adapted for executing the optimization algorithm multiple times and for subsequently executing a block adjustment, and/or for similarity transformation of the orientation information and position information of the adjusted network into a different target coordinate system.

15. A computer program, comprising
a multitude of instructions that can be stored in a plurality of wireless communication devices (10 - 40), of which at least one is in the form of a wireless mobile communication device (10 - 40) and includes a digital image capturing device;
wherein, when read out and processed by a microprocessor (18) of the at least one mobile communication device (10) and by the microprocessor of at least one further of the wireless communication devices (20 - 40), the instructions execute the method according to any one of claims 1 to 9.

## Revendications

1. Procédé destiné à déterminer l'orientation d'un premier équipement de communication (10) mobile sans fil, lequel présente un équipement de détection d'image (8) numérique, avec les étapes suivantes consistant à :
a1) effectuer, à l'aide de l'équipement de détection d'image (8) numérique du premier équipement de communication (10) mobile, des mesures de direction d'un deuxième équipement de communication (20), et déterminer, dans le premier équipement de communication (10) mobile, des premières valeurs d'observation à partir des mesures de direction, où les premières valeurs d'observation définissent l'orientation relative du premier équipement de communication (10) mobile par rapport au deuxième équipement de communication (20) en un moment de validité ;
a2) effectuer, à l'aide de l'équipement de détection d'image (8) numérique du premier équipement de communication (10) mobile, des mesures de direction d'au moins un troisième équipement de communication (30), et déterminer, dans le premier équipement de communication (10) mobile, des deuxièmes valeurs d'observation à partir des mesures de direction, où les deuxièmes valeurs d'observation définissent l'orientation relative du premier équipement de communication (10) mobile par rapport à l'au moins un troisième équipement de communication (30) au moment de validité ; et
a3) déterminer des troisièmes valeurs d'observation, lesquelles définissent l'orientation relative du deuxième équipement de communication (20) par rapport à l'au moins un troisième équipement de communication (30) au moment de validité ;
b1) fournir une première information d'orientation, laquelle fixe l'orientation absolue du deuxième équipement de communication (20) au moment de validité, où l'information d'orientation contient des indications sur l'orientation absolue et sa justesse ; et
b2) fournir au moins une deuxième information d'orientation, laquelle fixe l'orientation absolue de l'au moins un troisième équipement de communication (30) au moment de validité, où l'information d'orientation contient des indications sur l'orientation absolue et sa justesse ;
c) exécuter un algorithme d'optimisation pour estimer l'orientation du premier équipement de communication (10) mobile et la justesse de l'orientation en fonction des premières valeurs d'observation, des deuxièmes et troisièmes valeurs d'observation, ainsi que de la première et deuxième information d'orientation, où l'algorithme d'optimisation est basé sur une compensation de réseau ;
ou avec les étapes suivantes consistant à :
a1) effectuer, à l'aide de l'équipement de détection d'image (8) numérique du premier équipement de communication (10) mobile, des mesures de direction d'un deuxième équipement de communication (20), et déterminer, dans le premier équipement de communication (10) mobile, des premières valeurs d'observation à partir des mesures de direction, où les premières valeurs d'observation définissent l'orientation relative du premier équipement de communication (10) mobile par rapport au deuxième équipement de communication (20) en un moment de validité ;
a2) effectuer, à l'aide de l'équipement de détection d'image (8) numérique du premier équipement de communication (10) mobile, des mesures de direction d'au moins un troisième équipement de communication (30), et déterminer, dans le premier équipement de communication (10) mobile, des deuxièmes valeurs d'observation à partir des mesures de direction, où les deuxièmes valeurs d'observation définissent l'orientation relative du premier équipement de communication (10) mobile par rapport à l'au moins un troisième équipement de communication (30) au moment de validité ; et
b1) fournir une première information d'orientation, laquelle fixe l'orientation absolue du deuxième équipement de communication (20) au moment de validité, où l'information d'orientation contient des indications sur l'orientation absolue et sa justesse ; et
b2) fournir au moins une deuxième information d'orientation, laquelle fixe l'orientation absolue de l'au moins un troisième équipement de communication (30) au moment de validité, où l'information d'orientation contient des indications sur l'orientation absolue et sa justesse ;
c) exécuter un algorithme d'optimisation pour estimer l'orientation du premier équipement de communication (10) mobile et la justesse de l'orientation en fonction des premières valeurs d'observation et des deuxièmes valeurs d'observation, ainsi que de la première et deuxième information d'orientation, où l'algorithme d'optimisation est basé sur une compensation de réseau ;
ou avec les étapes suivantes consistant à:
a1) effectuer, à l'aide de l'équipement de détection d'image (8) numérique du premier équipement de communication (10) mobile, des mesures de direction d'un deuxième équipement de communication (20), et déterminer, dans le premier équipement de communication (10) mobile, des premières valeurs d'observation à partir des mesures de direction, où les premières valeurs d'observation définissent l'orientation relative du premier équipement de communication (10) mobile par rapport au deuxième équipement de communication (20) en un moment de validité ;
a3) déterminer des troisièmes valeurs d'observation, lesquelles définissent l'orientation relative du deuxième équipement de communication (20) mobile par rapport à l'au moins un troisième équipement de communication (30) au moment de validité ;
b1) fournir une première information d'orientation, laquelle fixe l'orientation absolue du deuxième équipement de communication (20) au moment de validité, où l'information d'orientation contient des indications sur l'orientation absolue et sa justesse ; et
b2) fournir au moins une deuxième information d'orientation, laquelle fixe l'orientation absolue de l'au moins un troisième équipement de communication (30) au moment de validité, où l'information d'orientation contient des indications sur l'orientation absolue et sa justesse ;
c) exécuter un algorithme d'optimisation pour estimer l'orientation du premier équipement de communication (10) mobile et la justesse de l'orientation en fonction des premières valeurs d'observation et des troisièmes valeurs d'observation, ainsi que de la première et deuxième information d'orientation, où l'algorithme d'optimisation est basé sur une compensation de réseau.

2. Procédé selon la revendication 1, **caractérisé par** les étapes suivantes consistant à :
fournir une première information de position, laquelle fixe la position du deuxième équipement de communication (20), où l'information de position contient des indications sur les coordonnées de position et leur justesse ;
fournir une seconde information de position, laquelle fixe la position de l'au moins un troisième équipement de communication (30), où l'information de position contient des indications sur les coordonnées de position et leur justesse ; et où
dans l'étape c), l'algorithme d'optimisation pour estimer l'orientation et les coordonnées de position du premier équipement de communication mobile, ainsi que la justesse de l'orientation et des coordonnées de position, est également exécuté en fonction de la première et deuxième information de position.

3. Procédé selon l'une des revendications précédentes, **caractérisé en ce que**
le deuxième équipement de communication (20) et/ou l'au moins un troisième équipement de communication (30) sont conçus en tant qu'équipement de communication mobile.

4. Procédé selon la revendication 3, **caractérisé en ce que**
dans l'étape c), les orientations et leurs justesses et/ou les coordonnées de position et la justesse des coordonnées de position du deuxième équipement de communication (20) et/ou du troisième équipement de communication (30) sont en outre déterminées au moyen de la compensation de réseau.

5. Procédé selon la revendication 2, **caractérisé en ce que**
pour déterminer les premières valeurs d'observation, des mesures de direction sont effectuées au moyen d'un équipement de détection d'image numérique du deuxième équipement de communication (20) ; **en ce que**
pour déterminer les deuxièmes valeurs d'observation, au moins une mesure de direction est mesurée au moyen d'un équipement de détection d'image numérique du troisième équipement de communication respectif ; et **en ce que**
pour déterminer les troisièmes valeurs d'observation, au moins une mesure de direction est effectuée au moyen de l'équipement de détection d'image numérique du deuxième et/ou du respectif troisième équipement de communication, où chaque valeur d'observation peut contenir des indications sur une direction spatiale et/ou une distance spatiale et/ou un angle.

6. Procédé selon l'une des revendications précédentes, **caractérisé en ce que**
dans le premier équipement de communication (10) mobile, une information d'orientation est établie en mettant en œuvre un programme de détermination d'orientation, lequel est basé sur un procédé d'orientation, en particulier d'un système gyroscopique, où l'information d'orientation contient des indications sur l'orientation du premier équipement de communication (10) mobile et la justesse de l'orientation, et/ou **en ce que**
dans le premier équipement de communication (10) mobile, une information de position est établie en mettant en œuvre un programme de détermination de position, lequel est basé sur un procédé de localisation, en particulier un procédé de localisation basé sur un GNSS ou basé sur un réseau local sans fil (WLAN), où l'information de position contient des indications sur les coordonnées de position du premier équipement de communication (10) mobile et la justesse des coordonnées de position, et **en ce que**
dans l'étape c), l'information d'orientation et/ou l'information de position du premier équipement de communication (10) mobile est traitée avec dans la compensation de réseau.

7. Procédé selon l'une des revendications précédentes, **caractérisé en ce que**
au moins dans le premier équipement de communication (10) mobile sont stockés des algorithmes d'optimisation différents pour estimer des orientations et leurs justesses et/ou des coordonnées de position et leurs justesses, et **en ce que**
un algorithme d'optimisation à exécuter est sélectionné en réponse à une condition prédéterminée.

8. Procédé selon l'une des revendications précédentes, **caractérisé en ce que**
le premier équipement de communication (10) mobile, le deuxième équipement de communication (20) et l'au moins un troisième équipement de communication (30, 40) sont sélectionnés selon des critères pouvant être prédéterminés.

9. Procédé selon l'une des revendications précédentes, **caractérisé en ce que**
l'exécution des étapes a1) à a3), et/ou l'étape b1), et/ou l'étape b2) et/ou l'étape c) sont exécutées en commandant le premier équipement de communication (10) mobile ou un équipement central (120).

10. Équipement de communication (10) mobile sans fil destiné à être utilisé dans un réseau de communication (5, 5', 5") sans fil, avec
- au moins une interface de communication (14, 14a) sans fil, laquelle est conçue pour l'envoi et la réception d'informations d'orientation et de valeurs d'observation vers ou depuis un deuxième équipement de communication (20) et au moins un troisième équipement de communication (30, 40),
- un premier équipement de stockage (11), où peuvent être stockées des premières valeurs d'observation, lesquelles définissent l'orientation relative de l'équipement de communication (10) mobile par rapport au deuxième équipement de communication (20), une première information d'orientation, laquelle fixe l'orientation absolue du deuxième équipement de communication (20), où l'information d'orientation contient des indications sur l'orientation absolue et sa justesse, et au moins une deuxième information d'orientation, laquelle fixe l'orientation absolue de l'au moins un troisième équipement de communication (30, 40), où l'information d'orientation contient des indications sur l'orientation absolue et sa justesse, des deuxièmes valeurs d'observation, lesquelles définissent l'orientation relative de l'équipement de communication (10) mobile par rapport à l'au moins un troisième équipement de communication (30), et des troisièmes valeurs d'observation, lesquelles définissent l'orientation relative du deuxième équipement de communication (20) mobile par rapport à l'au moins un troisième équipement de communication (30),
- au moins un équipement de détection d'image (8) numérique pour effectuer une mesure de direction au moins du deuxième équipement de communication (20), pour obtenir les premières valeurs d'observation ; et pour effectuer une mesure de direction au moins du troisième équipement de communication (30), pour obtenir les deuxièmes valeurs d'observation ;
- un deuxième équipement de stockage (12), où est enregistré un algorithme d'optimisation pour estimer l'orientation de l'équipement de communication (10) mobile et la justesse de l'orientation, où l'algorithme d'optimisation est basé sur une compensation de réseau, et
- un équipement de commande (18), lequel est conçu pour exécuter l'algorithme d'optimisation stocké afin d'estimer l'orientation de l'équipement de communication (10) mobile et la justesse de l'orientation en fonction des premières valeurs d'observation, de la première et deuxième information d'orientation, ainsi que des deuxièmes et troisièmes valeurs d'observation,
ou avec
- au moins une interface de communication (14, 14a) sans fil, laquelle est conçue pour l'envoi et la réception d'informations d'orientation et de valeurs d'observation vers ou depuis un deuxième équipement de communication (20) et au moins un troisième équipement de communication (30, 40),
- un premier équipement de stockage (11), où peuvent être stockées des premières valeurs d'observation, lesquelles définissent l'orientation relative de l'équipement de communication (10) mobile par rapport au deuxième équipement de communication (20), une première information d'orientation, laquelle fixe l'orientation absolue du deuxième équipement de communication (20), où l'information d'orientation contient des indications sur l'orientation absolue et sa justesse, et au moins une deuxième information d'orientation, laquelle fixe l'orientation absolue de l'au moins un troisième équipement de communication (30, 40), où l'information d'orientation contient des indications sur l'orientation absolue et sa justesse, et des deuxièmes valeurs d'observation, lesquelles définissent l'orientation relative de l'équipement de communication (10) mobile par rapport à l'au moins un troisième équipement de communication (30),
- au moins un équipement de détection d'image (8) numérique pour effectuer une mesure de direction au moins du deuxième équipement de communication (20), pour obtenir les premières valeurs d'observation ; et pour effectuer une mesure de direction au moins du troisième équipement de communication (30), pour obtenir les deuxièmes valeurs d'observation ;
- un deuxième équipement de stockage (12), où est enregistré un algorithme d'optimisation pour estimer l'orientation de l'équipement de communication (10) mobile et la justesse de l'orientation, où l'algorithme d'optimisation est basé sur une compensation de réseau, et
- un équipement de commande (18), lequel est conçu pour exécuter l'algorithme d'optimisation stocké afin d'estimer l'orientation de l'équipement de communication (10) mobile et la justesse de l'orientation en fonction des premières valeurs d'observation, de la première et deuxième information d'orientation, ainsi que des deuxièmes valeurs d'observation,
ou avec
- au moins une interface de communication (14, 14a) sans fil, laquelle est conçue pour l'envoi et la réception d'informations d'orientation et de valeurs d'observation vers ou depuis un deuxième équipement de communication (20) et au moins un troisième équipement de communication (30, 40),
- un premier équipement de stockage (11), où peuvent être stockées des premières valeurs d'observation, lesquelles définissent l'orientation relative de l'équipement de communication (10) mobile par rapport au deuxième équipement de communication (20), une première information d'orientation, laquelle fixe l'orientation absolue du deuxième équipement de communication (20), où l'information d'orientation contient des indications sur l'orientation absolue et sa justesse, et au moins une deuxième information d'orientation, laquelle fixe l'orientation absolue de l'au moins un troisième équipement de communication (30, 40), où l'information d'orientation contient des indications sur l'orientation absolue et sa justesse, et des troisièmes valeurs d'observation, lesquelles définissent l'orientation relative du deuxième équipement de communication (20) mobile par rapport à l'au moins un troisième équipement de communication (30),
- au moins un équipement de détection d'image (8) numérique pour effectuer une mesure de direction au moins du deuxième équipement de communication (20), pour obtenir les premières valeurs d'observation ;
- un deuxième équipement de stockage (12), où est enregistré un algorithme d'optimisation pour estimer l'orientation de l'équipement de communication (10) mobile et la justesse de l'orientation, où l'algorithme d'optimisation est basé sur une compensation de réseau, et
- un équipement de commande (18), lequel est conçu pour exécuter l'algorithme d'optimisation afin d'estimer l'orientation de l'équipement de communication (10) mobile et la justesse de l'orientation en fonction des premières valeurs d'observation, de la première et deuxième information d'orientation, ainsi que des troisièmes valeurs d'observation.

11. Équipement de communication mobile sans fil selon la revendication 10, **caractérisé en ce que**
dans le premier équipement de stockage (11) sont stockées
une première information de position, laquelle contient des indications sur les coordonnées de position et leur justesse concernant le deuxième équipement de communication (20),
une deuxième information de position, laquelle contient des indications sur les coordonnées de position et leur justesse concernant l'au moins un troisième équipement de communication (30), et/ou
au moins des quatrièmes valeurs d'observation, lesquelles définissent l'orientation relative de l'équipement de communication (10) mobile par rapport au deuxième équipement de communication (20), et/ou
des cinquièmes valeurs d'observation, lesquelles définissent le positionnement relatif de l'équipement de communication (10) mobile par rapport à l'au moins un troisième équipement de communication (30), et/ou
des sixièmes valeurs d'observation, lesquelles définissent le positionnement relatif entre le deuxième équipement de communication (20) et l'au moins un troisième équipement de communication (30), et où
- l'équipement de commande (18) est conçu pour exécuter l'algorithme d'optimisation afin d'estimer l'orientation et d'estimer les coordonnées de position de l'équipement de communication mobile, ainsi que la justesse de l'orientation et des coordonnées de position également en fonction de la première et deuxième information de position, et/ou de la quatrième, et/ou de la cinquième et/ou de la sixième valeur d'observation.

12. Équipement de communication mobile sans fil selon la revendication 10 ou 11, **caractérisé par**
au moins un équipement de mesure (17) pour mesurer une grandeur de mesure et un équipement d'exploitation (16) qui est conçu pour déterminer, en fonction de la grandeur de mesure mesurée, une valeur d'observation qui définit le positionnement relatif entre deux équipements de communication (10, 20 ; 30, 40), et/ou par
un récepteur compatible GNSS (15) qui est conçu pour recevoir des signaux de position afin d'en déterminer une information de position qui contient des coordonnées de position de l'équipement de communication mobile sans fil et la justesse des coordonnées de position, et/ou par
un capteur de déplacement (9) qui est conçu pour déterminer des modifications relatives d'orientations et/ou de positions, où
l'au moins un équipement de détection d'image (8) numérique est conçu pour établir l'orientation absolue de l'équipement de communication (10) mobile sans fil.

13. Équipement de communication mobile sans fil selon l'une des revendications 10 à 12, **caractérisé en ce que**
l'équipement de commande (18) est conçu pour déterminer les orientations et/ou les coordonnées de position du deuxième et/ou de l'au moins un troisième équipement de communication (20, 30, 40), ainsi que la justesse de l'orientation et/ou des coordonnées de position respectives, et **en ce que**
l'interface de communication (14) sans fil est conçue pour envoyer les orientations et leurs justesses et/ou les coordonnées de position et leur justesse vers le deuxième équipement de communication (20) et/ou au moins un troisième équipement de communication (30) et/ou un serveur (120) .

14. Équipement de communication mobile sans fil selon l'une des revendications 10 à 13, **caractérisé en ce que**
l'équipement de commande (18) est conçu pour exécuter plusieurs fois l'algorithme d'optimisation et pour ensuite l'exécution d'une compensation de bloc et/ou la transformation de similarité des informations d'orientation et des informations de position du réseau compensé dans un autre système de coordonnées cibles.

15. Programme d'ordinateur contenant
une pluralité d'instructions qui peuvent être stockées dans plusieurs équipements de communication (10-40) sans fil, dont l'un au moins est conçu en tant qu'équipement de communication (10-40) mobile sans fil et présente un équipement de détection d'image numérique, où les instructions, lorsqu'elles sont lues et traitées depuis un microprocesseur (18) de l'au moins un premier équipement de communication (10) mobile et du microprocesseur d'au moins un autre équipement de communication (20-40) sans fil, exécutent le procédé selon l'une des revendications 1 à 9.
